(19) Europäisches Patentamt
European Patent Office
Office européen des brevets

(11) EP 1 517 387 B1

(12) # EUROPEAN PATENT SPECIFICATION

(45) Date of publication and mention of the grant of the patent:
**08.08.2012 Bulletin 2012/32**

(21) Application number: **03736121.9**

(22) Date of filing: **10.06.2003**

(51) Int Cl.:
***H01M 6/16*** *(2006.01)* ***H01M 6/18*** *(2006.01)*
***H01B 1/06*** *(2006.01)* ***C07F 19/00*** *(2006.01)*
***C07F 9/26*** *(2006.01)* ***C07F 9/6593*** *(2006.01)*
***C07F 1/02*** *(2006.01)* ***C07F 9/06*** *(2006.01)*
***C07F 9/6581*** *(2006.01)* ***H01B 1/12*** *(2006.01)*
***H01M 10/42*** *(2006.01)* ***H01M 10/0565*** *(2010.01)*
***H01M 10/052*** *(2010.01)* ***H01M 10/0568*** *(2010.01)*

(86) International application number:
**PCT/JP2003/007352**

(87) International publication number:
**WO 2004/001882 (31.12.2003 Gazette 2004/01)**

(54) **SUPPORTING ELECTROLYTE FOR CELL AND METHOD FOR PRODUCTION THEREOF, AND CELL**

LEITELEKTROLYT FÜR BATTERIEN UND VERFAHREN ZU DESSEN HERSTELLUNG, SOWIE BATTERIE

ELECTROLYTE SUPPORT POUR PILE A COMBUSTIBLE, PROCEDE DE PRODUCTION, ET PILE A COMBUSTIBLE OBTENUE

(84) Designated Contracting States:
**DE FR**

(30) Priority: **19.06.2002 JP 2002178693**
**19.06.2002 JP 2002178772**

(43) Date of publication of application:
**23.03.2005 Bulletin 2005/12**

(73) Proprietor: **Bridgestone Corporation**
**Tokyo 104-8430 (JP)**

(72) Inventors:
- **OTSUKI, Masashi**
**Kodaira-shi, Tokyo 187-8531 (JP)**
- **EGUCHI, Shinichi**
**Kodaira-shi, Tokyo 187-8531 (JP)**
- **KANNO, Hiroshi**
**Kodaira-shi, Tokyo 187-8531 (JP)**

(74) Representative: **Oxley, Robin John George et al**
**Marks & Clerk LLP**
**90 Long Acre**
**London**
**WC2E 9RA (GB)**

(56) References cited:
**JP-A- 7 240 233** **JP-A- 2001 052 736**
**JP-A- 2001 338 682** **JP-A- 2002 083 628**

- **JAEGER, L. ET AL: "Pseudochalcogen compounds. XXVI. Reactions of organocyanamides, RNHCN (R = isopropyl) and silver phenylcyanamide, with hexachlorocyclotriphosphazene" ZEITSCHRIFT FUER ANORGANISCHE UND ALLGEMEINE CHEMIE , 591, 118-24 CODEN: ZAACAB; ISSN: 0044-2313, 1990, XP002444814**
- **LAWSON, GAVIN T. ET AL: "Cis-trihydrogen cyclotriphosphazenates-acidic anions in strongly basic media" CHEMICAL COMMUNICATIONS (CAMBRIDGE) , (5), 341-342 CODEN: CHCOFS; ISSN: 1359-7345, 2000, XP002444815**
- **STEINER, ALEXANDER ET AL: "Hexalithiiertes Hexakis(cyclohexylamino)cyclotriphosphazen e; ein (Li+)12-Käfig mit gefalteten [NP(NCy)2]36-Ionen" ANGEWANDTE CHEMIE, 35(6), 636-7, 1996, XP002444816**
- **LEE ET AL: "A Novel Flame-Retardant Additive for Lithium Batteries" ELECTROCHEM. SOLID-STATE LETT., vol. 3, no. 2, 2000, pages 63-65, XP002444817**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- DIAS ET AL: "Trends in Polymer Electrolytes for Secondary Lithium Batteries" J. POWER SOURCES, vol. 88, 2000, pages 169-191, XP002444818
- RIVALS, FREDERIC ET AL: "Syntheses and structures of trilithium cyclotriphosphazenates equipped with 2-halo-aryl substituents" ZEITSCHRIFT FUER ANORGANISCHE UND ALLGEMEINE CHEMIE , 629(1), 139-146 CODEN: ZAACAB; ISSN: 0044-2313, 7 January 2003 (2003-01-07), XP002444819
- RICHARDS, PHILIP I. ET AL: "In situ complexation of lithium chloride by amphiprotic cyclophosphazenes" CHEMICAL COMMUNICATIONS (CAMBRIDGE, UNITED KINGDOM) , (12), 1392-1393 CODEN: CHCOFS; ISSN: 1359-7345, 2003, XP002444820
- "McGraw-Hill Dictionary of Scientific and Technical Terms Sixth Edition",

## Description

### TECHNICAL FIELD

This invention relates to use of certain compunds as a support salt for a non-aqueous electrolyte cell as well as a non-aqueous electrolyte cell and a polymer cell using such a support salt, and more particularly to a combustion suppressing effect of such a support salt.

### BACKGROUND ART

Recently, cells having a small size, a light weight, a long service life and a high energy density are particularly demanded as a power source for small-size electronics devices with a rapid advance of electronics. A non-aqueous electrolyte cell using lithium as an active substance for negative electrode is known as one of the cells having a high energy density because an electrode potential of lithium is lowest among metals and an electric capacity per unit volume is large. Many kinds of such a cell are actively studied irrespectively of primary cell and secondary cell, and a part thereof is practiced and supplied to markets. For example, the non-aqueous electrolyte primary cells are used as a power source for cameras, electronic watches and various memory backups, and the non-aqueous electrolyte secondary cells are used as a driving power source for note-type personal computers, mobile phones and the like.

In these non-aqueous electrolyte cells, since lithium as an active substance for negative electrode violently reacts with a compound having an active proton such as water, alcohol or the like, an electrolyte used in these cells is limited to an aprotic organic solvent such as ester-based organic solvent or the like.

Heretofore, a separator is used in the non-aqueous electrolyte secondary cell for preventing the contact between positive electrode and negative electrode. As the separator is used a porous thin-layer film or the like for obstructing no inonic migration in the electrolyte. However, the thin-layer film has not an ability of holding the electrolyte, so that there is a risk of liquid leakage in the cells using the thin-layer film as a separator.

On the contrary, polymer cells using a polymer as an electrolyte are recently developed as a cell having no fear of liquid leakage. Particularly, the polymer cell is recently and increasingly studied because the formation of film is possible and the assembling property onto an electronics device is good and the effective utilization of spaces is possible in addition to no fear of liquid leakage. As an electrolyte used in the polymer cell, there are known a true polymer electrolyte formed by carrying a lithium salt on a polymer, and a gel electrolyte formed by swelling a polymer with an organic solvent. However, the true polymer electrolyte has a problem that an ion conductivity is considerably lower than that of the gel electrolyte.

On the other hand, in the polymer cell using the gel electrolyte, since a lithium metal or a lithium alloy is used as a material for negative electrode likewise the aforementioned non-aqueous electrolyte secondary cell, the negative electrode violently reacts with a compound having an active proton such as water, alcohol or the like, so that the organic solvent used in the gel electrolyte is limited to an aprotic organic solvent such as an ester based organic solvent or the like likewise the electrolyte of the above non-aqueous electrolyte cell.

In general, in the non-aqueous electrolyte of the non-aqueous electrolyte cell or the electrolyte of the polymer cell are used lithium salts such as $LiClO_4$, $LiCF_3SO_3$, $LiAsF_6$, $LiC_4F_9SO_3$, $Li(CF_3SO_2)_2N$, $Li(C_2F_5SO_2)_2N$, $LiBF_4$, $LiPF_6$ and the like as a support salt for giving a sufficient conduction to the electrolyte and a solid electrolyte.

Lee et al. disclose the use of $[NP(OCH_3)_2]_3$ as a flame-retardant additive for lithium batteries (Electrochemical and Solids State Letters 2000, 3(2), 63-65).

### DISCLOSURE OF THE INVENTION

As mentioned above, the non-aqueous electrolyte cell has a merit that the energy density is high, while the polymer cell has merits that there is no fear of the electrolyte leakage and the assembling property onto the electronics device is good and the effective utilization of spaces is possible, but the material for negative electrode in these non-aqueous electrolyte cell and polymer cell is the lithium metal or lithium alloy and is very high in the activity to water, so that there is a problem that when the sealing of the cell is incomplete and water penetrates thereinto or the like, the material for negative electrode reacts with water to generate hydrogen or cause ignition or the like and hence the risk becomes high. Also, since the lithium metal is low in the melting point (about 170°C), there is a problem that if a large current violently flows in the short-circuiting or the like, very risky states such as abnormal heat generation of the cell, fusion of the cell and the like are caused. Further, there is a problem that the non-aqueous electrolyte based on the organic solvent or the organic solvent in the electrolyte of the polymer cell is vaporized and decomposed accompanied with the heat generation of the above non-aqueous electrolyte cell and polymer cell to generate gas, or the explosion-ignition of the cell is caused by the generated gas.

In addition, there is a problem that the support salt containing oxygen among the above conventional support

salts releases oxygen in the heating-burning to promote the combustion of the cell. On the other hand, the support salt containing no oxygen such as $LiBF_4$, $LiPF_6$ or the like does not promote the combustion but is low in the effect of suppressing the combustion. In the electrolyte of the non-aqueous electrolyte cell and polymer cell using the above support salt, the risk of ignition and the like is still high.

It is, therefore, an object of the invention to provide a combustion suppressing effect for a non-aqueous electrolyte cell and a polymer cell. Also, it is another object of the invention to provide a safety non-aqueous electrolyte cell using a support salt. Further, it is the other object of the invention to provide a safety polymer cell reducing the risk of ignition-firing by using a support salt.

The inventors have made various studies in order to achieve the above objects and found that a compound having a phosphazene derivative as a basic skeleton and containing lithium in its molecule can be used as a support salt to provide safety non-aqueous electrolyte cell and polymer cell being low in the risk of ignition-firing because this compound has a combustion suppressing effect.

That is, the invention is as follows.

1. The use of a compound represented by the following formula (I) for a support salt of a non-aqueous electrolyte cell or a polymer cell, wherein the compound represented by the formula (I) is produced by a method which comprises the steps of:

   (i) a step of reacting a phosphazene derivative represented by the following formula (III) with a primary amine represented by the following formula (IV) to produce a phosphazene derivative represented by the following formula (V); and
   (ii) a step of adding the phosphazene derivative of the formula (V) with a lithium alkoxide to produce the compound represented by the formula (I):

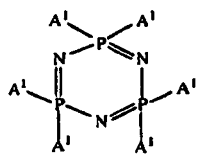

..... (I)

(wherein $A^1$ is independently NRLi or F, and at least one $A^1$ is NRLi, and R is an alkyl group or an aryl group)

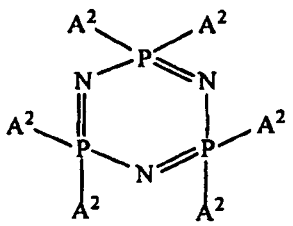

(III)

(wherein $A^2$ is F or Cl)

$$R - NH_2 \qquad (IV)$$

(wherein R is an alkyl group or an aryl group)

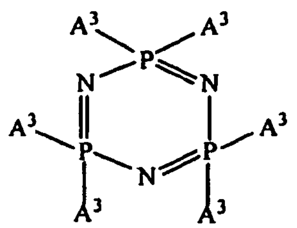

..... (V)

(wherein $A^3$ is independently NHR or F, and at least one $A^3$ is NHR, and R is an alkyl group or an aryl group).

2. The use of the compound represented by the formula (I) for the support salt as set out in item 1, wherein the primary amine of the formula (IV) is aniline.

3. The use of a compound represented by the following formula (II) for a support salt of a non-aqueous electrolyte cell or a polymer cell, wherein the compound represented by the formula (II) is produced by a method which comprises the steps of:

(i) a step of reacting a phosphazene derivative represented by the following formula (VI) with a primary amine represented by the following formula (IV) to produce a phosphazene derivative represented by the following formula (VII); and

(ii) a step of adding the phosphazene derivative of the formula (VII) with a lithium alkoxide to produce the compound represented by the formula (II):

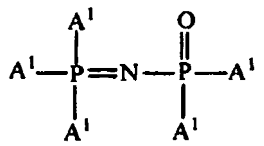

..... (II)

(wherein $A^1$ is independently NRLi or F, and at least one $A^1$ is NRLi, and R is an alkyl group or an aryl group),

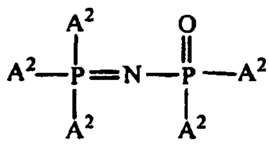

..... (VI)

(wherein $A^2$ is F or Cl)

$$R-NH_2 \qquad (IV)$$

(wherein R is an alkyl group or an aryl group)

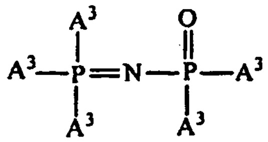

..... (VII)

(wherein $A^3$ is independently NHR or F, and at least one $A^3$ is NHR, and R is an alkyl group or an aryl group).

4. The use of the compound represented by the formula (II) for the support salt as set out in item 3, wherein the primary amine of the formula (IV) is aniline.

5. A non-aqueous electrolyte cell comprising a positive electrode, a negative electrode and a non-aqueous electrolyte comprising at least one aprotic organic solvent and a support salt, wherein the aprotic organic solvent is selected from the group consisting of 1,2-dimethoxyethane, tetrahydrofuran, dimethyl carbonate, diethyl carbonate, diphenyl carbonate, ethylene carbonate, propylene carbonate, γ-butyrolactone, γ-valerolactone, methylethyl carbonate and ethylmethyl carbonate, and wherein the support salt comprises a compound represented by the following formula (I) or (II):

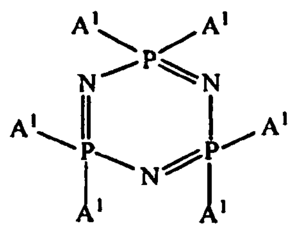

..... (I)

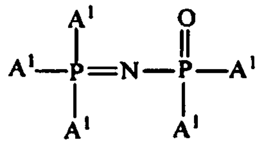

..... (II)

(in the formulae (I) and (II), $A^1$ is independently NRLi or F, and at least one $A^1$ is NRLi, and R is an alkyl group or an aryl group).

6. A non-aqueous electrolyte cell as set out in item 5, wherein a phosphazene derivative is added to the aprotic organic solvent and the phosphazine derivative has a viscosity at 25°C of not more than 300 mPa·s (300 cP) and is represented by the following formula (VIII) or (IX):

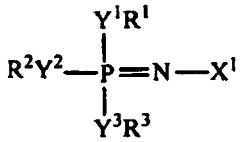

..... (VIII)

(wherein $R^1$, $R^2$ and $R^3$ are independently an alkoxy group, an alkyl group, a carboxyl group, an acyl group or an aryl group or a halogen element, and $X^1$ is a substituent containing at least one element selected from the group consisting of carbon, silicon, germanium, tin, nitrogen, phosphorus, arsenic, antimony, bismuth, oxygen, sulfur, selenium, tellurium and polonium, and $Y^1$, $Y^2$ and $Y^3$ are independently $CH_2$ group, a bivalent connecting group containing at least one element selected from the group consisting of oxygen, sulfur, selenium, nitrogen, boron, aluminium, scandium, gallium, yttrium, indium, lanthanum, thallium, carbon, silicon, titanium, tin, germanium, zirconium, lead, phosphorus, vanadium, arsenic, niobium, antimony, tantalum, bismuth, chromium, molybdenum, tellurium, polonium, tungsten, iron, cobalt and nickel, a bivalent element which is oxygen, sulfur or selenium or a single bond)

$(NPR^4{}_2)_n$ (IX)

(wherein $R^4$ is independently an alkoxy group, an alkyl group, a carboxyl group, an acyl group or an aryl group or a halogen element, and n is 3-15).

7. A non-aqueous electrolyte cell as set out in item 6, wherein the phosphazene derivative of the formula (IX) is represented by the following formula (X):

$(NPF_2)_n$ (X)

(wherein n is 3-13).

8. A non-aqueous electrolyte cell as set out in item 6, wherein the phosphazene derivative of the formula (IX) is represented by the following formula (XI):

$(NPR^5{}_2)_n$ (XI)

(wherein $R^5$ is independently an alkoxy group, an alkyl group, an acyl group, an aryl group, a carboxyl group or fluorine, and at least one of all $R^5$s is a fluorine containing alkoxy group, a fluorine containing alkyl group, a fluorine containing acyl group, a fluorine containing aryl group or fluorine, and n is 3-8, provided that all of $R^5$s are not fluorine).

9. A non-aqueous electrolyte cell as set out in item 5, wherein a phosphazine derivative is added to the aprotic solvent and the phosphazene derivative is a solid at 25°C and is represented by the following formula (XII):

$(NPR^6{}_2)_n$ (XII)

(wherein $R^6$ is independently an alkoxy group, an alkyl group, a carboxyl group, an acyl group, an aryl group or a halogen element, and n is 3-6).

10. A non-aqueous electrolyte cell as set out in item 5, wherein an isomer of a phosphazine derivative is added to the aprotic organic solvnet, and the isomer of the phosphazene derivative is represented by the following formula (XIII) and is an isomer of a phosphazene derivative represented by the following formula (XIV):

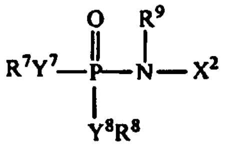

..... (XIII)

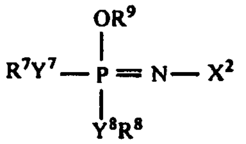

..... (XIV)

(in the formulae (XIII) and (XIV), $R^7$, $R^8$ and $R^9$ are independently an alkoxy group, an alkyl group, a carboxyl group, an acyl group, an aryl group or a halogen element, and $X^2$ is a substituent containing at least one element selected from the group consisting of carbon, silicon, germanium, tin, nitrogen, phosphorus, arsenic, antimony, bismuth, oxygen, sulfur, selenium, tellurium and polonium, and $Y^7$ and $Y^8$ are independently $CH_2$ group, a bivalent connecting group containing at least one element selected from the group consisting of oxygen, sulfur, selenium, nitrogen, boron, aluminium, scandium, gallium, yttrium, indium, lanthanum, thallium, carbon, silicon, titanium, tin, germanium, zirconium, lead, phosphorus, vanadium, arsenic, niobium, antimony, tantalum, bismuth, chromium, molybdenum, tellurium, polonium, tungsten, iron, cobalt and nickel, a bivalent element which is oxygen, sulfur or selenium or a single bond).

11. A polymer cell comprising a positive electrode, a negative electrode, an electrolyte comprising a support salt and a polymer, wherein the support salt comprises a compound represented by the following formula (I) or (II):

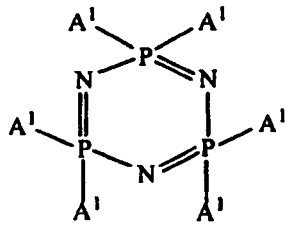

..... (I)

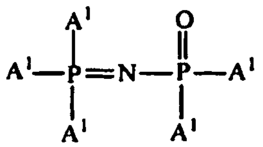

..... (II)

(in the formulae (I) and (II), $A^1$ is independently NRLi or F, and at least one $A^1$ is NRLi, and R is an alkyl group or an acyl group).

12. A polymer cell as set out in item 11, wherein the polymer is at least one of polyethylene oxide, polyacrylate and polypropylene oxide.

13. A polymer cell as set out in item 11 or 14, wherein the polymer has a weight average molecular weight of not less than 10000.

14. A polymer cell as set out in item 13, wherein the weight average molecular weight of the polymer is not less than 5000000.

15. A polymer cell as set out in any of items 11 to 14, wherein an amount of the polymer to a total amount of the polymer and the support salt is 80-95% by mass.

16. A polymer cell as set out in any of items 11 to 15, wherein the electrolyte furtehr contians a phosphazene derivative, and the phosphazene derivative has a viscosity at 25°C of not more than 300 mPa·s (300 cP) and is represented by the following formula (VIII) or (IX):

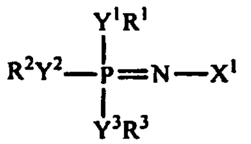

..... (VIII)

(wherein $R^1$, $R^2$ and $R^3$ are independently an alkoxy group, an alkyl group, a carboxyl group, an acyl group, an aryl group or a halogen element, and $X^1$ is a substituent containing at least one element selected from the group consisting of carbon, silicon, germanium, tin, nitrogen, phosphorus, arsenic, antimony, bismuth, oxygen, sulfur, selenium, tellurium and polonium, and $Y^1$, $Y^2$ and $Y^3$ are independently $CH_2$ group, a bivalent connecting group containing at least one element selected from the group consisting of oxygen, sulfur, selenium, nitrogen, boron, aluminium, scandium, gallium, yttrium, indium, lanthanum, thallium, carbon, silicon, titanium, tin, germanium, zirconium, lead, phosphorus, vanadium, arsenic, niobium, antimony, tantalum, bismuth, chromium, molybdenum, tellurium, polonium, tungsten, iron, cobalt and nickel, a bivalent element which is oxygen, sulfur or selenium or a single bond)

$(NPR^4{}_2)_n$ (IX)

(wherein $R^4$ is independently an alkoxy group, an alkyl group, a carboxyl group, an acyl group, an aryl group or a halogen element, and n is 3-15).

17. A polymer cell as set out in item 16, wherein the phosphazene derivative of the formula (IX) is represented by the following formula (X):

$(NPF_2)_n$ (X)

(wherein n is 3-13).

18. A polymer cell as set out in item 1, wherein the phosphazene derivative of the formula (IX) is represented by the following formula (XI):

$(NPR^5{}_2)_n$ (XI)

(wherein $R^5$ is independently an alkoxy group, an alkyl group, an acyl group, an aryl group, a carboxyl group or fluorine, and at least one of all $R^5$s is a fluorine containing alkoxy group, a fluorine containing alkyl group, a fluorine containing acyl group, a fluorine containing aryl group or fluorine, and n is 3-8, provided that all of $R^5$s are not fluorine).

19. A polymer cell as set out in any of items 11 to 15, wherein the electrolyte further contains a phosphazene derivative, and the phosphazene derivative is a solid at 25°C and is represented by the following formula (XII):

$(NPR^6{}_2)_n$ (XII)

(wherein $R^6$ is independently an alkoxy group, an alkyl group, a carboxyl group, an acyl group, an aryl group or a halogen element, and n is 3-6).

20. A polymer cell as set out in any of items 11 to 15, wherein the electrolyte further contains an isomer of a phosphazene derivative, and the isomer of the phosphazene derivative is represented by the following formula (XIII) and is an isomer of a phosphazene derivative represented by the following formula (XIV):

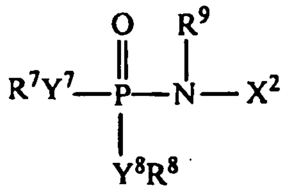

..... (XIII)

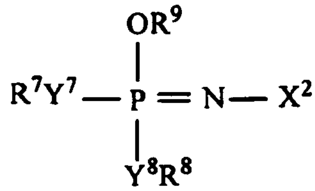

..... (XIV)

(in the formulae (XIII) and (XIV), $R^7$, $R^8$ and $R^9$ are independently an alkoxy group, an alkyl group, a carboxyl group, an acyl group, an aryl group or a halogen element, and $X^2$ is a substituent containing at least one element selected from the group consisting of carbon, silicon, germanium, tin, nitrogen, phosphorus, arsenic, antimony, bismuth, oxygen, sulfur, selenium, tellurium and polonium, and $Y^7$ and $Y^8$ are independently $CH_2$ group, a bivalent connecting

group containing at least one element selected from the group consisting of oxygen, sulfur, selenium, nitrogen, boron, aluminium, scandium, gallium, yttrium, indium, lanthanum, thallium, carbon, silicon, titanium, tin, germanium, zirconium, lead, phosphorus, vanadium, arsenic, niobium, antimony, tantalum, bismuth, chromium, molybdenum, tellurium, polonium, tungsten, iron, cobalt and nickel, a bivalent element which is oxygen, sulfur or selenium or a single bond).

21. A polymer cell as set out in any of items 16 to 20, wherein a total content of the phosphazene derivative and the isomer of the phosphazene derivative in the electrolyte is at least 0.5% by mass.

22. A polymer cell as set out in item 21, wherein the total content of the phosphazene derivative and the isomer of the phosphazene derivative in the electrolyte is at least 2.5% by mass.

BEST MODE FOR CARRYING OUT THE INVENTION

The invention will be described in detail below.

<Support salt for cell>

According to the invention a compound represented by the following formula (I) or (II) is used as a support salt for a non-aqueous electrolyte cell:

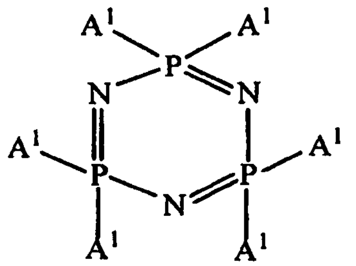

..... (I)

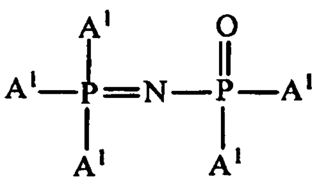

..... (II)

(in the formulae (I) and (II), $A^1$ is independently NRLi or F, and at least one $A^1$ is NRLi, and R is an alkyl or an aryl group).

As the monovalent substituent in R of the formulae (I) and (II), a phenyl group, particularly a phenyl group containing an electron absorbing group, or methyl group is preferable from a viewpoint of the reactivity.

The compound represented by the formula (I) or (II) contains lithium in its molecule and is dissolved in an aprotic organic solvent mentioned later to release lithium ion, so that it functions as an ion source of lithium ion and can improve the conductivity of an electrolyte. Also, the above compound has a phosphazene derivative as a basic skeleton, so that it has an action of suppressing combustion.

In the formula (I) or (II), the support salt in which at least one of all $A^1$s is F is high in the action of suppressing the combustion of the electrolyte as compared with the support salt containing no fluorine. Moreover, the action of suppressing the combustion increases as the number of fluorine contained in the support salt increases.

<Production method of support salt for cell>

The support salt for the cell according to the invention can be produced by the following method. At first, a phosphazene derivative represented by the following formula (III) or (VI) is reacted with a primary amine represented by the following formula (IV) to produce a phosphazene derivative represented by the following formula (V) or (VII) at a first step.

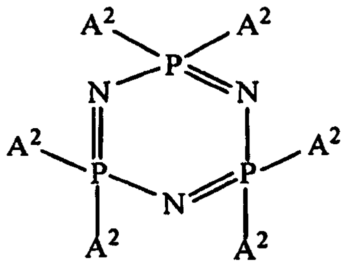

..... (III)

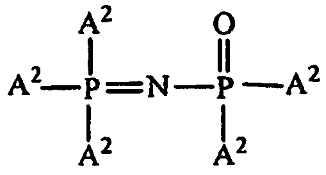

..... (VI)

(in the formulae (III) and (VI), $A^2$ is F or C1)

R - $NH_2$ (IV)

(wherein R is a monovalent substituent)

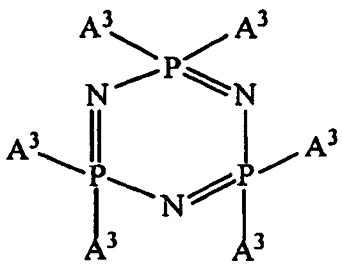

..... (V)

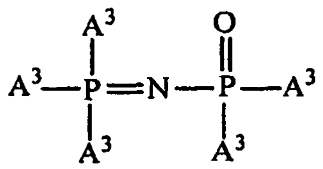

..... (VII)

(in the formulae (V) and (VII), $A^3$ is independently NHR or F, and at least one $A^3$ is NHR, and R is an akyl group or a phenyl group).

As the monovalent substituent in R of the formulae (IV), (V) and (VII) are mentioned the same ones as described in the monovalent substituent of the formulae (I) and (II). Similarly, phenyl group or methyl group is preferable from a viewpoint of the reactivity.

In the formulae (III) and (VI), when all $A^2$s are F, the number of amino groups to be introduced can be changed by varying the amount of the primary amine of the formula (IV) used. The amount of the primary amine of the formula (VI) used is suitable to be 1.5-2 times the substitution number of amino group to be introduced. For example, the primary amine is used in an amount of 1.5-2.0 mol per 1 mol of the phosphazene derivative of the formula (III) or (VI) in case of one amino substitution, 3.0-4.0 mol in case of two substitution, or 4.5-6.0 mol in case of three substitution. In the first step, the reaction can be promoted by adding a carbonate of an alkali metal such as potassium carbonate, sodium carbonate or the like. The amount of the alkali metal carbonate used is preferable to be 1.2-3 times mol of the amine used. The alkali metal carbonate has an action of neutralizing HF or HCl produced by the reaction and preventing acidification of the system. If the system becomes acidic, the yield lowers and there is caused a bad influence such as progress of side-reaction or the like.

The phosphazene derivative in which all $A^2$s in the formulae (III) and (VI) are F is obtained by reacting the phosphazene derivative in which all $A^2$s in the formulae (III) and (VI) are Cl with a fluorinating agent. As the fluorinating agent are mentioned alkali fluorides such as NaF, KF and the like, in which NaF is preferable in a point that it is cheap,

but there is no problem on the use of KF in performance. The amount of the fluorinating agent used is 7 mol per 1 mol of the phosphazene derivative of the formula (III), and 6 mol per 1 mol of the phosphazene derivative of the formula (VI), but the amount used somewhat increases or decreases in accordance with the reaction conditions. As the amount becomes too large, it tends to lower the yield, while as the amount becomes too small, the fluorination may not be partly conducted. The inventors have made various studies and found that it is preferable to use the alkali fluoride in an amount of 6.5-8 mol on the phosphazene derivative of the formula (III) or 5.4-6.8 mol on the phosphazene derivative of the formula (VI).

Considering that a boiling point of the phosphazene derivative in which all $A^2$s in the formula (III) is 51°C and a boiling point of the phosphazene derivative in which all $A^2$s in the formula (VI) is 97°C and further the fluorination reaction is an exothermic reaction, the fluorination reaction is preferable to be carried out in acetonitrile while refluxing at 60-80°C in case of the phosphazene derivative of the formula (III) or at about 90°C in case of the phosphazene derivative of the formula (VI). The amount of acetonitrile used is 100-1000 mL per 1 mol of the phosphazene derivative of the formula (III) or (VI). However, this solvent amount is a mere indication, and since the reaction is a solid-liquid reaction, the amount is sufficient to cause no precipitation of solid through the stirring. These phosphazene derivatives can be purified by distilling in the vicinity of the respective boiling points. Moreover, when a solvent recovered by filtering a salt by-produced through the fluorination reaction such as NaCl or the like from a solution of removing the phosphazene derivative through distillation is recycled in the fluorination reaction, the reaction rate becomes faster than the use of new solvent because a small amount of the phosphazene derivative not removed by the distillation is retained in the solvent and such a phosphazene derivative form a nucleus of the fluorination reaction.

In case of producing the phosphazene derivative in which all $A^3$s in the formulae (V) and (VII) are NHR, it is preferable to use the phosphazene derivative in which all $A^2$s in the formulae (III) and (VI) are Cl. In this case, the above fluorination reaction step can be omitted, and a target compound is obtained in a lower cost. In case of producing the phosphazene derivative in which all $A^3$s in the formula (V) are NHR, the amount of the primary amine used os preferable to be 9 mol per 1 mol of the phosphazene derivative of the formula (III), while in case of producing the phosphazene derivative in which all $A^3$s in the formula (VII) are NHR, the amount of the primary amine used is preferable to be 7.5 mol per 1 mol of the phosphazene derivative of the formula (VI).

The first step is carried out in a solvent. As the solvent are mentioned polar solvent such as tetrahydrofuran (THF), N,N-dimethylformamide, acetonitrile and the like, and non-polar solvents such as hexane and the like. When the number of amino group to be introduced is large, the use of the polar solvent is preferable because the target product can be synthesized in a high yield, while when the number of amino group to be introduced is small, the use of the non-polar solvent is preferable because the target product can be synthesized in a high yield. The amount of the solvent used is preferable to be 100-1000 mL per 1 mol of the phosphazene derivative of the formula (III) or (VI). Moreover, the solvent used can be again used after the recovery. As a merit of the recycling, there are mentioned environment-friendliness, fast proceed of the reaction and the like.

In order to promote the reaction of the phosphazene derivative of the formula (III) or (VI) with the primary amine of the formula (IV), it is necessary to conduct the heating at a start of the reaction. The heating temperature is preferable to be 50-80°C. Once the reaction starts, it is desirable that the reaction is controlled to hold at about 60°C because it is an exothermic reaction. As a heating time, a time of sufficiently proceeding the reaction is properly selected with the above heating time in mind. For example, when THF is used as a solvent, it is preferable that the reaction is carried out at about 60°C for about 10 hours. After the completion of the reaction, the reaction liquid is aged for about 1 day and thereafter hydrogen fluoride or hydrochloric acid produced by the above reaction is removed from the reaction system. Also, a fluoride salt or chloride salt of the primary amine precipitated is filtered.

In the second step, a lithium alkoxide is added to the phosphazene derivative of the formula (V) or (VII) to produce a compound represented by the formula (I) or (II).

As the lithium alkoxide are mentioned lithium methoxide, lithium ethoxide and the like. Among them, lithium methoxide is preferable because the reactivity is high. The amount of the lithium alkoxide used is preferable to be 1.5-12 mol per 1 mol of the phosphazene derivative of the formula (V) or (VII). This amount is properly selected with respect to the lithium substitution number to be targeted and is preferable to be 1.5-2 equivalent times the substitution number.

Moreover, the second step is an exothermic reaction, so that it is preferable to conduct the reaction while maintaining the temperature of the reaction system at 20-50°C.

After the completion of the reaction between the phosphazene derivative of the formula (V) or (VII) and the lithium alkoxide, the compound represented by the formula (I) or (II) can be isolated, for example, by a recrystallization method.

<Non-aqueous electrolyte cell>

The non-aqueous electrolyte cell of the invention comprises a positive electrode, a negative electrode and an electrolyte comprising an aprotic organic solvent and the aforementioned support salt, and is provided with members

usually used in the technical field of the non-aqueous electrolyte cell such as separator and the like, if necessary.

-Positive electrode-

The materials for positive electrode in the non-aqueous electrolyte cell of the invention partly differ between the primary cell and the secondary cell. For example, as a positive electrode for the non-aqueous electrolyte primary cell are preferably mentioned graphite fluoride ($(CF_x)_n$), $MnO_2$ (which may be synthesized electrochemically or chemically), $V_2O_5$, $MoO_3$, $Ag_2CrO_4$, CuO, CuS, $FeS_2$, $SO_2$, $SOCl_2$, $TiS_2$ and the like. Among them, $MnO_2$, $V_2O_5$ and graphite fluoride are preferable because they are high in the capacity, good in the safety, high in the discharge potential and excellent in the wettability to the electrolyte, and $MnO_2$ and $V_2O_5$ are more preferable in a point of the cost. These materials may be used alone or in a combination of two or more.

As a positive electrode for the non-aqueous electrolyte secondary cell are preferably mentioned metal oxides such as $V_2O_5$, $V_6O_{13}$, $MnO_2$, $MnO_3$ and the like; lithium-containing composite oxides such as $LiCoO_2$, $LiNiO_2$, $LiMn_2O_4$, $LiFeO_2$, $LiFePO_4$ and the like; metal sulfides such as $TiS_2$, $MoS_2$ and the like; electrically conductive polymers such as polyaniline and the like. The lithium-containing composite oxide may be a composite oxide containing two or three transition metals selected from the group consisting of Fe, Mn, Co and Ni. In the latter case, the composite oxide is represented by $LiFe_xCo_yNi_{(1-x-y)}O_2$ (wherein $0 \leq x < 1$, $0 \leq y < 1$, $0 < x+y \leq 1$), $LiMn_xFe_yO_{2-x-y}$ or the like. Among them, $LiCoO_2$, $LiNiO_2$, $LiMn_2O_4$ are particularly preferable because they are high in the capacity, high in the safety and excellent in the wettability to the electrolyte. These materials may be used alone or in a combination of two or more.

The positive electrode may be mixed with an electrically conducting agent and a binding agent, if necessary. As the electrically conducting agent are mentioned acetylene black and the like, and as the binding agent are mentioned polyvinylidene fluoride (PVDF), polytetrafluoroethylene (PTFE) and the like. In case of using these additives, they may be compounded in the same compounding ratio as in the conventional case, for example, positive electrode material: electrically conducting agent:binding agent = 8:1:1-8:1:0.2 (mass ratio).

The form of the positive electrode is not particularly limited and can be properly selected from the well-known forms as the electrode. For example, there are mentioned a sheet form, a column form, a plate form, a spiral form and the like.

-Negative electrode-

The materials for negative electrode in the non-aqueous electrolyte cell of the invention partly differ between the primary cell and the secondary cell. For example, as a negative electrode for the non-aqueous electrolyte primary cell are mentioned lithium metal itself, lithium alloys and the like. As a metal to be alloyed with lithium are mentioned Sn, Pb, Al, Au, Pt, In, Zn, Cd, Ag, Mg and the like. Among them, Al, Zn and Mg are preferable from a viewpoint of a greater amount of deposit and toxicity. These materials may be used alone or in a combination of two or more.

As a negative electrode for the non-aqueous electrolyte secondary cell are preferably mentioned lithium metal itself, an alloy of lithium with Al, In, Pb, Zn or the like, a carbonaceous material such as graphite doped with lithium, and the like. Among them, the carbonaceous material such as graphite or the like is preferable in a point that the safety is higher. These materials may be used alone or in a combination of two or more.

The form of the negative electrode is not particularly limited and may be properly selected from the well-known forms likewise the form of the positive electrode.

-Non-aqueous electrolyte-

The electrolyte for the non-aqueous electrolyte cell of the invention comprises an aprotic organic solvent and the aforementioned support salt. Heretofore, in the electrolyte based on the aprotic organic solvent has been caused a problem in the safety as previously mentioned. However, the electrolyte comprising the support salt of the invention and the aprotic organic solvent suppresses the vaporization-decomposition at a relatively low temperature of not higher than about 200°C and reduces the risk of ignition-firing because the support salt is the compound having the phosphazene derivative as the basic skeleton and has an action of suppressing the combustion. Also, even if ignition is caused inside the cell through the fusion of the negative electrode material or the like, the risk of catching fire is low. Furthermore, since phosphorus has an action of suppressing the chain decomposition of a high molecular weight material constituting the cell, the risk of ignition-firing is effectively reduced.

The electrolyte added with the support salt is preferable to have a limit oxygen index of not less than 21 volume%. When the limit oxygen index is less than 21 volume%, the effect of suppressing the ignition-firing may be insufficient. The term "limit oxygen index" used herein means a value of a minimum oxygen concentration required for maintaining the combustion of the material under given test conditions defined in JIS K7201 and represented by volume percentage, in which the lower the limit oxygen index, the higher the risk of ignition-firing and inversely the higher the limit oxygen

index, the lower the risk of ignition-firing. In the invention, the risk of ignition-firing is evaluated by the measurement of the limit oxygen index according to JIS K7201.

Since the limit oxygen index under an atmosphere condition corresponds to 20.2 volume%, the limit oxygen index of 20.2 volume% means that combustion occurs in the atmosphere. The inventors have made various studies and found that the self-extinguishing property is developed at the limit oxygen index of not less than 21% by volume, and the flame retardance is developed at not less than 23% by volume, and the incombustibility is developed at not less than 25% by volume. Moreover, the terms "self-extinguishing property, flame retardance, incombustibility" used herein are defined in the method according to UL 94HB method, wherein when a test piece of 127 mm x 12.7 mm is prepared by impregnating 1.0 mL of an electrolyte into an incombustible quartz fiber and is ignited under atmospheric environment, the self-extinguishing property indicates a case that the ignited flame is extinguished in a line between 25 mm and 100 mm and an object fallen down from a net is not fired, and the flame retardance indicates a case that the ignited flame does not arrive at a line of 25 mm of the apparatus and the object fallen down from the net is not fired, and the incombustibility indicates a case that no ignition is observed (combustion length: 0 mm).

-Aprotic organic solvent-

The aprotic organic solvent constituting the electrolyte in the non-aqueous electrolyte cell in which the support salt is used in the invention does not react with lithium or lithium alloy used in the negative electrode. The aprotic organic solvent is not particularly limited, but includes ether compounds, ester compounds and so on from a view point that the viscosity of the electrolyte is controlled to a low value. Concretely, there are preferably mentioned 1,2-dimethoxyethane (DME), tetrahydrofuran, dimethyl carbonate, diethyl carbonate (DEC), diphenyl carbonate, ethylene carbonate (EC), propylene carbonate (PC), γ-butyrolactone (GBL), γ-valerolactone, methylethyl carbonate, ethylmethyl carbonate and so on. Among them, cyclic ester compounds such as propylene carbonate, γ-butyrolactone and the like, chain ester compounds such as dimethyl carbonate, methylethyl carbonate and the like, and chain ether compounds such as 1,2-dimethoxyethane and the like are preferable in case of using in the non-aqueous electrolyte primary cell, while cyclic ester compounds such as ethylene carbonate, propylene carbonate, γ-butyrolactone and the like, chain ester compounds such as dimethyl carbonate, ethylmethyl carbonate, diethyl carbonate and the like, and chain ether compounds such as 1,2-dimethoxyethane and the like are preferable in case of using in the non-aqueous electrolyte secondary cell. The cyclic ester compound is preferable in a point that the dielectric constant is high and the solubility to the aforementioned support salt is excellent, and the chain ester compound and ether compound are preferable in a point that the viscosity is low and hence the viscosity of the electrolyte is made low. They may be used alone or in a combination of two or more.

The content of the support salt in the electrolyte is preferably 0.1-1 mol, more preferably 0.2-1 mol per 1 L of the aprotic organic solvent. When the content is less than 0.1 mol, the sufficient electric conduction of the electrolyte can not be ensured, and hence troubles may be caused in the discharge characteristics of the cell, while when it exceeds 1 mol, the viscosity of the non-aqueous electrolyte rises and the sufficient mobility of lithium ion can not be ensured, and hence the sufficient electric conduction of the electrolyte can not be ensured likewise the above case and as a result, the solution resistance rises and troubles may be caused in the discharge characteristics of the primary cell or in the discharge-recharge characteristics of the secondary cell.

-Phosphazene derivative and isomer of phosphazene derivative-

The aprotic organic solvent is preferable to be added with a phosphazene derivative and/or an isomer of a phosphazene derivative. By using the above support salt having a combustion suppressing action can be lowered the risk of ignition-firing of the cell, while such a risk can be further lowered by adding the phosphazene derivative and/or the isomer of the phosphazene derivative to the aprotic organic solvent.

The phosphazene derivative and the isomer of the phosphazene derivative lower the risk of ignition-firing of the cell by the same reasons as in the support salt. Further, the phosphazene derivative and the isomer of the phosphazene derivative containing a halogen (e.g. fluorine) acts as an agent for catching active radical even in an accidental combustion, and the phosphazene derivative and the isomer of the phosphazene derivative having an organic substituent(s) has an effect of shielding oxygen because a carbide (char) is produced on the electrode material and the separator in the combustion. In addition, the phosphazene derivative and the isomer of the phosphazene derivative has an effect of suppressing the formation of dendrite even in the recharging, so that the safety becomes higher as compared with the system of no addition.

The phosphazene derivative added to the aprotic organic solvent is not particularly limited. However, the phosphazene derivative having a viscosity at 25°C of not more than 300 mPa · s (300 cP) and represented by the following formula (VIII) or (IX) is preferable from a viewpoint that the viscosity is relatively low and the support salt is well dissolved. Among such phosphazene derivatives, a phosphazene derivative having a viscosity of not more than 5 mPa·s is most preferable.

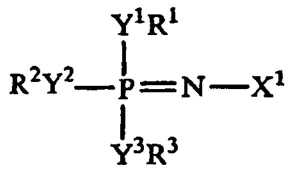

····· (VIII)

(wherein $R^1$, $R^2$ and $R^3$ are independently a monovalent substituent or a halogen element, and $X^1$ is a substituent containing at least one element selected from the group consisting of carbon, silicon, germanium, tin, nitrogen, phosphorus, arsenic, antimony, bismuth, oxygen, sulfur, selenium, tellurium and polonium, and $Y^1$, $Y^2$ and $Y^3$ are independently a bivalent connecting group, a bivalent element or a single bond)

$$(NPR^4{}_2)_n \qquad (IX)$$

(wherein $R^4$ is independently a monovalent substituent or a halogen element, and n is 3-15)

The viscosity at 25°C of the phosphazene derivative represented by the formula (VIII) or (IX) is required to be not more than 300 mPa·s, and is preferably not more than 100 mPa·s (100 cP), further preferably not more than 5 mPa·s (5 cP). In case of using in the non-aqueous electrolyte primary cell, the viscosity is particularly preferable to be not more than 20 mPa·s (20 cP), and further preferably not more than 5 mPa·s (5 cP). When the viscosity is more than 300 mPa·s (300 cP), the support salt is hardly dissolved, and the wettability to the positive electrode material, separator and the like lowers, and the ion electric conduction is considerably lowered by the increase of the viscous resistance of the electrolyte and particularly performances are lacking in the use under a lower temperature condition of not higher than freezing point or the like.

In the formula (VIII), $R^1$, $R^2$ and $R^3$ are not particularly limited unless they are a monovalent substituent or a halogen element. As the monovalent substituent are mentioned an alkoxy group, an alkyl group, a carboxyl group, an acyl group, an aryl group and the like. Among them, the alkoxy group is preferable in a point that the viscosity is low and the viscosity of the electrolyte is made low. On the other hand, as the halogen element are preferably mentioned fluorine, chlorine, bromine and the like. All of $R^1$-$R^3$ may be the same kind of the substituent, or some of them may be different kinds of substituents.

As the alkoxy group are mentioned methoxy group, ethoxy group, propoxy group, butoxy group, and an alkoxy-substituted alkoxy group such as methoxyethoxy group, methoxyethoxyethoxy group and the like. Among them, all of R1-R3 are preferable to be methoxy group, ethoxy group, methoxyethoxy group or methoxyethoxyethoxy group, and particularly methoxy group or ethoxy group is preferable from a viewpoint of low viscosity and high dielectric constant.

As the alkyl group are mentioned methyl group, ethyl group, propyl group, butyl group, pentyl group and the like. As the acyl group are mentioned formyl group, acetyl group, propionyl group, butylyl group, isobutylyl group, valeryl group and the like. As the aryl group are mentioned phenyl group, tolyl group, naphthyl group and the like.

In these monovalent substituents, a hydrogen element is preferable to be substituted with a halogen element. As the halogen element, fluorine, chlorine and bromine are preferable, and among them fluorine is particularly preferable and chlorine is next preferable. The monovalent substituent in which a hydrogen element is substituted with fluorine tends to be large in the effect of improving the cycle characteristic of the secondary cell as compared with the chlorine substitution.

As the bivalent connecting group shown by $Y^1$, $Y^2$ and $Y^3$ of the formula (VIII) are mentioned $CH_2$ group and a bivalent connecting group containing at least one element selected from the group consisting of oxygen, sulfur, selenium, nitrogen, boron, aluminum, scandium, gallium, yttrium, indium, lanthanum, thallium, carbon, silicon, titanium, tin, germanium, zirconium, lead, phosphorus, vanadium, arsenic, niobium, antimony, tantalum, bismuth, chromium, molybdenum, tellurium, polonium, tungsten, iron, cobalt and nickel. Among them, $CH_2$ group and the bivalent connecting group containing at least one element selected from the group consisting of oxygen, sulfur, selenium and nitrogen are preferable, and the bivalent connecting group containing sulfur and/or selenium is particularly preferable. Also, $Y^1$, $Y^2$ and $Y^3$ may be a bivalent element such as oxygen, sulfur, selenium or the like, or a single bond. All of $Y^1$-$Y^3$ may the same kind, or some of them may be different kinds from each other.

In the formula (VIII), $X^1$ is preferable to be a substituent containing at least one element selected from the group consisting of carbon, silicon, nitrogen, oxygen and sulfur from a viewpoint of the harmfulness, environment-friendliness and the like. Among these substituents, a substituent having a structure shown by the following formula (XV), (XVI) or (XVII) is more preferable.

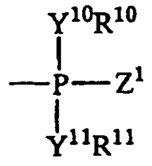

..... (XV)

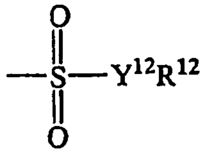

..... (XVI)

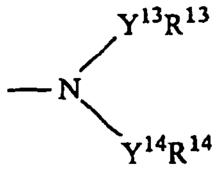

..... (XVII)

(In the formulae (XV), (XVI) and (XVII), $R^{10}$-$R^{14}$ are independently a monovalent substituent or a halogen element, and $Y^{10}$-$Y^{14}$ are independently a bivalent connecting group, a bivalent element or a single bond, and $Z^1$ is a bivalent group or a bivalent element.)

As $R^{10}$-$R^{14}$ in the formulae (XV), (XVI) and (XVII) are preferably mentioned the same monovalent substituents or halogen elements as described in $R^1$-$R^3$ of the formula (VIII). Also, they may be the same kind in the same substituent, or some of them may be different kinds from each other. $R^{10}$ and $R^{11}$ in the formula (XV), and $R^{13}$ and $R^{14}$ in the formula (XVII) may be bonded with each other to form a ring.

As the group shown by $Y^{10}$-$Y^{14}$ in the formulae (XV), (XVI) and (XVII) are mentioned the same bivalent connecting groups, bivalent elements or the like as described in $Y^1$-$Y^3$ of the formula (VIII). Similarly, the group containing sulfur and/or selenium is particularly preferable because the risk of ignition-firing of the electrolyte is reduced. They may be the same kind in the same substituent, or some of them may be different kinds from each other.

As $Z^1$ in the formula (XV) are mentioned $CH_2$ group, CHR' group (R' is an alkyl group, an alkoxyl group, a phenyl group or the like, and so forth on), NR' group, and a bivalent group containing at least one element selected from the group consisting of oxygen, sulfur, selenium, boron, aluminum, scandium, gallium, yttrium, indium, lanthanum, thallium, carbon, silicon, titanium, tin, germanium, zirconium, lead, phosphorus, vanadium, arsenic, niobium, antimony, tantalum, bismuth, chromium, molybdenum, tellurium, polonium, tungsten, iron, cobalt and nickel. Among them, $CH_2$ group, CHR' group, NR' group and the bivalent group containing at least one element selected from the group consisting of oxygen, sulfur and selenium are preferable. Particularly, the group containing sulfur and/or selenium is preferable because the risk of ignition-firing of the electrolyte is reduced. Also, $Z^1$ may be a bivalent element such as oxygen, sulfur, selenium or the like.

Among such substituents, a phosphorus-containing substituent as shown by the formula (XV) is particularly preferable in a point that the risk of ignition-firing can be effectively reduced. Also, when the substituent is a sulfur-containing substituent as shown by the formula (XVI), it is particularly preferable in a point that the interfacial resistance of the electrolyte is made small.

In the formula (IX), $R^4$ is not particularly limited unless it is a monovalent substituent or a halogen element. As the monovalent substituent are mentioned an alkoxy group, an alkyl group, a carboxyl group, an acyl group, an aryl group and the like. Among them, the alkoxy group is preferable in a point that the viscosity of the electrolyte can be made low. As the halogen element are preferably mentioned fluorine, chlorine, bromine and the like. As the alkoxy group are mentioned methoxy group, ethoxy group, methoxyethoxy group, propoxy group, phenoxy group and the like. Among them, methoxy group, ethoxy group, n-propoxy group, phenoxy group are particularly preferable in case of using in the non-aqueous electrolyte primary cell, while methoxy group, ethoxy group, methoxyethoxy group and phenoxy group are particularly preferable in case of using in the non-aqueous electrolyte secondary cell. In these monovalent substituents, a hydrogen element is preferable to be substituted with a halogen element. As the halogen element are preferably mentioned fluorine, chlorine, bromine and the like. As a substituent substituted with fluorine is mentioned, for example, trifluoroethoxy group.

It is possible to prepare an electrolyte having a more preferable viscosity, a solubility suitable for addition and mixing and the like by properly selecting $R^1$-$R^4$, $R^{10}$-$R^{14}$, $Y^1$-$Y^3$, $Y^{10}$-$Y^{14}$ and $Z^1$ in the formulae (VIII), (IX), (XV)-(XVII). These phosphazene derivatives may be used alone or in a combination of two or more.

Among the phosphazene derivatives of the formula (IX), a phosphazene derivative represented by the following formula (X) is particularly preferable from a viewpoint that the viscosity of the electrolyte is made low to improve the low-temperature characteristic of the cell and further improve the safety of the electrolyte:

$$(NPF_2)_n \qquad (X)$$

(wherein n is 3-13).

The phosphazene derivative of the formula (X) is a low viscosity liquid at room temperature (25°C) and has an action of lowering a freezing point. By adding this phosphazene derivative to the electrolyte, it is made possible to give excellent low-temperature characteristic to the electrolyte, and also it is attained to make the viscosity of the electrolyte low, and there can be provided a non-aqueous electrolyte cell having a low internal resistance and a high electric conductivity. Therefore, it is possible to provide a non-aqueous electrolyte cell developing an excellent discharge characteristic over a long time even if it is particularly used under a low-temperature condition in low-temperature areas or season.

In the formula (X), n is preferably 3-4, more preferably 3 in a point that the excellent low-temperature characteristic can be given to the electrolyte and the viscosity of the electrolyte cam be made low. When the value of n is small, the boiling point is low and a property of preventing ignition in the approaching to a flame can be improved. While, as the value of n becomes large, the boiling point becomes high and the electrolyte can be stably used even at a high temperature. In order to obtain target performances utilizing the above nature, it is possible to properly select and use plural phosphazene derivatives.

By properly selecting the value of n in the formula (X), it is possible to prepare an electrolyte having a more preferable viscosity, a solubility suitable for mixing, a low-temperature characteristic and the like. These phosphazene derivatives may be used alone or in a combination of two or more.

The viscosity of the phosphazene derivative of the formula (X) is not particularly limited unless it is not more than 20 mPa·s (20 cP), but it is preferably not more than 10 mPa·s (10 cP), more preferably not more than 5 mPa·s (5 cP) from a viewpoint of the improvements of the electric conduction and low-temperature characteristic. Moreover, the viscosity according to the invention is determined by using a viscosity measuring meter (R-type viscometer Model RE500-SL, made by Toki Sangyo Co., Ltd.) and conducting the measurement at each revolution rate of 1 rpm, 2 rpm, 3 rpm, 5 rpm, 7 rpm, 10 rpm, 20 rpm and 50 rpm for 120 seconds to measure a viscosity under the revolution rate when an indication value is 50-60% as an analytical condition.

Among the phosphazene derivatives of the formula (IX), a phosphazene derivative represented by the following formula (XI) is particularly preferable from a viewpoint that the safety of the electrolyte is improved:

$$(NPR^5{}_2)_n \qquad (XI)$$

(wherein $R^5$ is independently a monovalent substituent or a halogen element, and at least one of all $R^5$s a fluorine-containing monovalent substituent or a fluorine, and n is 3-8, provided that all $R^5$s are not fluorine).

When the phosphazene derivative of the formula (XI) is included, the excellent self-extinguishing property or flame retardance can be given to the electrolyte to improve the safety of the electrolyte. When using a phosphazene derivative of the formula (XI) in which at least one of all $R^5$s is a fluorine-containing monovalent substituent, it is possible to give a more excellent safety to the electrolyte. When using a phosphazene derivative of the formula (XI) in which at least one of all $R^5$s is fluorine, it is possible to give a further excellent safety. That is, the phosphazene derivative of the formula (XI) in which at least one of all $R^5$s is a fluorine-containing monovalent substituent or fluorine has an effect of hardly burning the electrolyte as compared with the phosphazene derivative containing no fluorine, and a further excellent safety can be given to the electrolyte.

Moreover, the cyclic phosphazene derivative of the formula (XI), in which all $R^5$s are fluorine and n is 3, is incombustible and has a large effect of preventing ignition in the approaching to the flame, but the boiling point is very low, and if it is completely vaporized, the remaining aprotic organic solvent or the like is burnt out.

As the monovalent substituent in the formula (XI) are mentioned an alkoxy group, an alkyl group, an acyl group, an aryl group, a carboxyl group and the like, and the alkoxy group is preferable in a point that the improvement of the safety of the electrolyte is excellent. As the alkoxy group are mentioned methoxy group, ethoxy group, n-propoxy group, i-propoxy group, butoxy group, and an alkoxy group substituted alkoxy group such as methoxyethoxy group or the like. Particularly, methoxy group, ethoxy group and n-propoxy group are preferable in a point that the improvement of the safety of the electrolyte is excellent. Also, methoxy group is preferable im a point that the viscosity of the electrolyte is made low.

In the formula (XI), n is preferably 3-4 in a point that the excellent safety can be given to the electrolyte.

The monovalent substituent is preferable to be substituted with fluorine. When all $R^5$s in the formula (XI) are not fluorine, at least one monovalent substituent contains fluorine.

The content of fluorine in the phosphazene derivative is preferably 3-70% by weight, more preferably 7-45% by weight. When the content is within the above numerical range, "excellent safety" can be preferably given to the electrolyte.

As a molecular structure of the phosphazene derivative of the formula (XI), a halogen element such as chlorine, bromine or the like may be included in addition to fluorine. However, fluorine is most preferable, and chlorine is net preferable. The fluorine containing derivative tends to have a large effect of improving the cycle characteristic of a secondary cell as compared with the chlorine containing derivative.

By properly selecting $R^5$ and the value of n in the formula (XI), it is possible to prepare an electrolyte having more preferable safety and viscosity, a solubility suitable for mixing and the like. These phosphazene derivatives may be used alone or in a combination of two or more.

The viscosity of the phosphazene derivative of the formula (XI) is not particularly limited unless it is not more than 20 mPa·s (20 cP), but it is preferably not more than 10 mPa·s (10 cP), more preferably not more than 5 mPa·s (5 cP) from a viewpoint of the improvements of the electric conduction and low-temperature characteristic.

As the phosphazene derivative added to the aprotic organic solvent, a phosphazene derivative being a solid at 25°C (room temperature) and represented by the following formula (XII) is preferable from a viewpoint that the safety of the electrolyte is improved while controlling the viscosity rise of the electrolyte:

$$(NPR^6{}_2)_n \qquad (XII)$$

(wherein $R^6$ is independently a monovalent substituent or a halogen element, and n is 3-6).

Since the phosphazene derivative of the formula (XII) is a solid at room temperature (25°C), when it is added to the electrolyte, it is dissolved in the electrolyte to raise the viscosity of the electrolyte. However, if the addition amount is a given value as mentioned later, a ratio of raising the viscosity of the electrolyte is low and there is provided a non-aqueous electrolyte cell having a low internal resistance and a high electric conductivity. Also, the phosphazene derivative of the formula (XII) is dissolved in the electrolyte, the long-life stability of the electrolyte is excellent.

In the formula (XII), R6 is not particularly limited unless it is a monovalent substituent or a halogen element. As the monovalent substituent are mentioned an alkoxy group, an alkyl group, a carboxyl group, an acyl group, an aryl group and the like. As the halogen element are preferably mentioned halogen elements such as fluorine, chlorine, bromine, iodine and the like. Among them, the alkoxy group is particularly preferable in a point that the viscosity rise of the electrolyte can be suppressed. As the alkoxy group are preferable methoxy group, ethoxy group, methoxyethoxy group, propoxy group (isopropoxy group, n-propoxy group), phenoxy group, trifluoroethoxy group and the like, and methoxy group, ethoxy group, propoxy group (isopropoxy group, n-propoxy group), phenoxy group and trifluoroethoxy group are more preferable in a point that the viscosity rise of the electrolyte can be suppressed. The monovalent substituent is preferable to contain the above halogen element.

In the formula (XII), n is particularly preferable to be 3 or 4 in a point that the viscosity rise of the electrolyte can be suppressed.

As the phosphazene derivative of the formula (XII) are particularly preferable a structure in which $R^6$ is methoxy group and n is 3 in the formula (XII), a structure in which $R^6$ is at least either methoxy group or phenoxy group and n is 4 in the formula (XII), a structure in which $R^6$ is ethoxy group and n is 4 in the formula (XII), a structure in which $R^6$ is isopropoxy group and n is 3 or 4 in the formula (XII), a structure in which $R^6$ is n-propoxy group and n is 4 in the formula (XII), a structure in which $R^6$ is trifluoroethoxy group and n is 3 or 4 in the formula (XII), a structure in which $R^6$ is phenoxy group and n is 3 or 4 in the formula (XII) in a point that the viscosity rise of the electrolyte can be suppressed.

By properly selecting each substituent and value of n in the formula (XII), it is possible to prepare an electrolyte having a more preferable viscosity, a solubility suitable for mixing and the like. These phosphazene derivatives may be used alone or in a combination of two or more.

The isomer of the phosphazene derivative to be added to the aprotic organic solvent is not particularly limited, but an isomer represented by the following formula (XIII) and of a phosphazene derivative represented by the following formula (XIV) is preferable from a viewpoint that the low-temperature characteristic of the non-aqueous electrolyte cell is improved and further the safety of the electrolyte is improved:

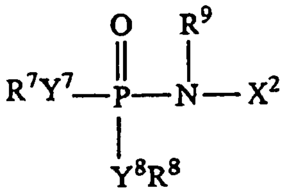

····· (XIII)

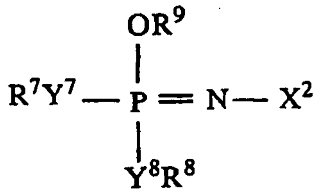

····· (XIV)

(in the formulae (XIII) and (XIV), $R^7$, $R^8$ and $R^9$ are independently a monovalent substituent or a halogen element, and $X^2$ is a substituent containing at least one element selected from the group consisting of carbon, silicon, germanium, tin, nitrogen, phosphorus, arsenic, antimony, bismuth, oxygen, sulfur, selenium, tellurium and polonium, and $Y^7$ and $Y^8$ are independently a bivalent connecting group, a bivalent element or a single bond).

In the formula (XIII), $R^7$, $R^8$ and $R^9$ are not particularly limited unless they are a monovalent substituent or a halogen element. As the monovalent substituent are mentioned an alkoxy group, an alkyl group, a carboxyl group, an acyl group, an aryl group and the like. As the halogen element are preferably mentioned halogen elements such as fluorine, chlorine, bromine and the like. Among them, fluorine, alkoxy group and the like are particularly preferable in a point of the low-temperature characteristic and electrochemical stability of the electrolyte. Also, fluorine, alkoxy group, fluorine-containing alkoxy group and the like are preferable in a point that the viscosity of the electrolyte is made low. All of $R^7$-$R^9$ may be the same kind of the substituent, or some of them may be different kinds of the substituent.

As the alkoxy group are mentioned, for example, methoxy group, ethoxy group, propoxy group, butoxy group, and alkoxy-substituted alkoxy groups such as methoxyethoxy group, methoxyethoxyethoxy group and the like. Among them, all of $R^7$-$R^9$ are preferable to be methoxy group, ethoxy group, methoxyethoxy group or methoxyethoxyethoxy group, and all of them are particularly preferable to be methoxy group or ethoxy group from a viewpoint of low viscosity and high dielectric constant. As the alkyl group are mentioned methyl group, ethyl group, propyl group, butyl group, pentyl group and the like. As the acyl group are mentioned formyl group, acetyl group, propionyl group, butylyl group, isobutylyl group, valeryl group and the like. As the aryl group are mentioned phenyl group, tolyl group, naphthyl group and the like. In these substituents, hydrogen element is preferable to be substituted with a halogen element. As this halogen element are preferably mentioned fluorine, chlorine, bromine and the like.

In the formula (XIII), as the bivalent connecting group shown by $Y^7$ and $Y^8$ are mentioned $CH_2$ group and bivalent connecting group containing at least one element selected from the group consisting of oxygen, sulfur, selenium, nitrogen, boron, aluminum, scandium, gallium, yttrium, indium, lanthanum, thallium, carbon, silicon, titanium, tin, germanium, zirconium, lead, phosphorus, vanadium, arsenic, niobium, antimony, tantalum, bismuth, chromium, molybdenum, tellurium, polonium, tungsten, iron, cobalt and nickel. Among them, $CH_2$ group and the bivalent connecting group containing at least one element selected from the group consisting of oxygen, sulfur, selenium and nitrogen are preferable. Also, $Y^7$ and $Y^8$ may be a bivalent element such as oxygen, sulfur, selenium or the like, or a single bond. Particularly, the bivalent connecting group containing sulfur and/or oxygen, oxygen element and sulfur element are preferable in a point that the safety of the electrolyte is improved, while the bivalent connecting group containing oxygen and oxygen element are preferable in a point that the low-temperature characteristic of the electrolyte is excellent. $Y^7$ and $Y^8$ may be the same kind or different kinds.

As $X^2$ in the formula (XIII) is preferable a substituent containing at least one element selected from the group consisting of carbon, silicon, nitrogen, oxygen and sulfur from a viewpoint of consideration on toxicity, environment and the like, and a substituent having a structure represented by the following formula (XVIII), (XIX) or (XX) is more preferable.

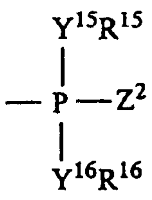

····· (XVIII)

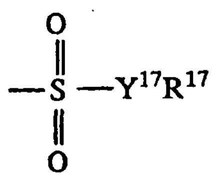

····· (XIX)

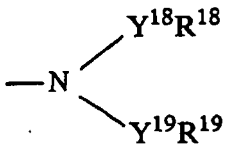

····· (XX)

(In the formulae (XVIII), (XIX) and (XX), $R^{15}$-$R^{19}$ are independently a monovalent substituent or a halogen element, and $Y^{15}$-$Y^{19}$ are independently a bivalent connecting group, a bivalent element or a single bond, and $Z^2$ is a bivalent group or a bivalent element.)

As $R^{15}$-$R^{19}$ in the formulae (XVIII), (XIX) and (XX) are preferably mentioned the same monovalent substituents or halogen elements as described in $R^7$-$R^8$ of the formula (XIII). Also, they may be the same kind in the same substituent, or some of them may be different kinds from each other. Further, $R^{15}$ and $R^{16}$ in the formula (XVIII) and $R^{18}$ and $R^{19}$ in the formula (XX) may be bonded with each other to form a ring.

As the group shown by $Y^{15}$-$Y^{19}$ in the formulae (XVIII), (XIX) and (XX) are mentioned the same bivalent connecting groups, bivalent elements and the like as described in $Y^7$-$Y^8$ of the formula (XIII). Similarly, the bivalent connecting group containing sulfur and/or oxygen, oxygen element or sulfur element is particularly preferable in a point that the safety of the electrolyte is improved. Also, the bivalent connecting group containing oxygen or oxygen element is preferable in a point that the low-temperature characteristic of the electrolyte is excellent. They may be the same kind in the same substituent, or some of them may be different kinds from each other.

As $Z^2$ in the formula (XVIII) are mentioned $CH_2$ group, CHR' group (R' is an alkyl group, an alkoxyl group, a phenyl group or the like, and so forth on), NR' group, and a bivalent group containing at least one element selected from the group consisting of oxygen, sulfur, selenium, boron, aluminum, scandium, gallium, yttrium, indium, lanthanum, thallium, carbon, silicon, titanium, tin, germanium, zirconium, lead, phosphorus, vanadium, arsenic, niobium, antimony, tantalum, bismuth, chromium, molybdenum, tellurium, polonium, tungsten, iron, cobalt and nickel. Among them, $CH_2$ group, CHR' group, NR' group and the bivalent group containing at least one element selected from the group consisting of oxygen, sulfur and selenium are preferable. Also, $Z^2$ may be a bivalent element such as oxygen, sulfur, selenium or the like. Particularly, the bivalent group containing sulfur and/or selenium, sulfur element or selenium element is preferable in a point that the safety of the electrolyte is improved. Furthermore, the bivalent group containing oxygen or oxygen element is preferable in a point that the low-temperature characteristic of the electrolyte is excellent.

Among these substituents, a phosphorus-containing substituent as shown by the formula (XVIII) is particularly preferable in a point that the safety can be effectively improved. Further, when each of $Z^2$, $Y^{15}$ and $Y^{16}$ in the formula (XVIII) is oxygen element, it is particularly possible to develop a very excellent low-temperature characteristic in the electrolyte. Also, when the substituent is a sulfur-containing substituent as shown in the formula (XIX), it is preferable in a point that the interfacial resistance of the electrolyte is made small.

By properly selecting $R^7$-$R^9$, $R^{15}$-$R^{19}$, $Y^7$-$Y^8$, $Y^{15}$-$Y^{19}$ and $Z^2$ in the formulae (XIII), (XVIII), (XIX) and (XX), it is possible to prepare an electrolyte having a more preferable viscosity, a solubility suitable for adding-mixing, a low-temperature characteristic and the like. These compounds may be used alone or in a combination of two or more.

The isomer represented by the formula (XIII) is an isomer of a phosphazene derivative represented by the formula (XIV), which can be produced by adjusting a vacuum degree and/or a temperature in the formation of the phosphazene derivative of the formula (XIV). The content of the isomer in the electrolyte (volume%) can be measured by the following measuring method.

<<Measuring method>>

It can be measured by finding a peak area of a sample through a gel permeation chromatography (GPC) or a high-speed liquid chromatography, comparing the found peak area with a previously found area per mole of the isomer to obtain a molar ratio, and further converting into a volume while considering a specific gravity. Also, it may be determined through a gas chromatography.

As the phosphazene derivative represented by the formula (XIV), it is preferable that the viscosity is relatively low and the support salt can be well dissolved. As $R^7$-$R^9$, $Y^7$-$Y^8$ and $X^2$ in the formula (XIV) are preferably mentioned the same as described in the explanation on $R^7$-$R^9$, $Y^7$-$Y^8$ and $X^2$ of the formula (XIII).

As the phosphazene derivative represented by the formula (VIII), (IX), (XII) or (XIV) or the isomer represented by the formula (XIII), it is preferable to contain a halogen element containing substituent in its molecular structure. When the halogen element containing substituent is existent in the molecular structure, even if the content of the phosphazene derivative or the isomer is small, it is possible to effectively reduce the risk of ignition-fire of the electrolyte by a halogen gas derived therefrom. Moreover, the occurrence of halogen radical may come into problem in case of the compound containing a halogen element in its substituent. However, such a problem is not caused in case of the above phosphazene derivative or the isomer of the phosphazene derivative because phosphorus element in the molecular structure catches

the halogen radical to form a stable phosphorus halide.

The content of the halogen element in the phosphazene derivative or the isomer of the phosphazene derivative is preferably 2-80% by weight, more preferably 2-60% by weight, further preferably 2-50% by weight. When the content is less than 2% by weight, the effect by including the halogen element may not sufficiently be developed, while when it exceeds 80% by weight, the viscosity becomes higher and the electric conductivity may lower in the addition to the electrolyte. As the halogen element, fluorine, chlorine, bromine and the like are preferable, and fluorine is particularly preferable from a viewpoint that good cell characteristics are obtained.

In the phosphazene derivatives represented by the formulae (VIII), (IX), (XI), (XII) and (XIV), a flash point is not particularly limited, but it is preferably not lower than 100°C, more preferably not lower than 150°C, further preferably not lower than 300°C from a viewpoint of the control of fire and the like. On the other hand, the phosphazene derivative represented by the formula (X) has no flash point. The term "flash point" used herein means such a temperature that a flame is broadened on a surface of a substance and covers at least 75% of the surface of the substance. The flash point is a scale looking a tendency of forming a combustible mixture with air. When the phosphazene derivative has a flash point of not lower than 100°C or has no flash point, the fire or the like is suppressed, and also if the fire or the like is caused in an interior of a cell, it is possible to reduce the risk of outblazing over the surface of the electrolyte by ignition.

The content of the phosphazene derivative and the isomer of the phosphazene derivative in the non-aqueous electrolyte is shown below. From a viewpoint of "limit oxygen index", the content of the phosphazene derivative represented by the formula (VIII) or (IX) to the electrolyte is preferably not less than 5 volume%, more preferably 10-50 volume%. By adjusting the content to a value within the above numerical range is effectively reduced the risk of ignition-fire of the electrolyte. Although the risk of fire is effectively reduced, the range of the content differs in accordance with the kind of the support salt and the kind of the electrolyte used. Concretely, the system used is optimized by properly selecting the content so as to control the viscosity to a lowest value and render the limit oxygen index into not less than 21 volume%.

From a viewpoint of "safety" in the electrolyte, the content of the phosphazene derivative of the formula (X) is preferably not less than 5 volume%, and the content of the phosphazene derivative of the formula (XI) is preferably not less than 10 volume%, more preferably not less than 15 volume%, and the content of the phosphazene derivative of the formula (XII) is preferably not less than 20 volume%, and the total content of the isomer of the formula (XIII) and the phosphazene derivative of the formula (XIV) is preferably not less than 20 volume%. When the content is within the above numerical range, the safety of the electrolyte can be preferably improved.

From a viewpoint of "low-temperature characteristics" in the electrolyte, the content of the phosphazene derivative of the formula (X) is preferably not less than 1 volume%, more preferably not less than 3 volume%, further preferably not less than 5 volume%, and the total content of the isomer of the formula (XIII) and the phosphazene derivative of the formula (XIV) is not less than 1 volume%, more preferably not less than 2 volume%, further preferably not less than 5 volume%. When the content is less than 1 volume%, the low-temperature characteristics in the electrolyte are not sufficient.

From a viewpoint of "decrease of viscosity" in the electrolyte, the content of the phosphazene derivative of the formula (X) is preferably not less than 3 volume%, more preferably 3-80 volume%. When the content is less than 3 volume%, the viscosity of the electrolyte can not be sufficiently made low.

From a viewpoint of "control of viscosity rise" in the electrolyte, the content of the phosphazene derivative of the formula (XII) is preferably not more than 40% by weight, more preferably not more than 35% by weight, further preferably not more than 30% by weight. When the content is more than 40% by weight, the viscosity rise of the electrolyte becomes remarkably large and the internal resistance becomes high and the electric conductivity becomes low.

-Other members-

As the other member used in the non-aqueous electrolyte cell of the invention is mentioned a separator interposed between the positive and negative electrodes in the non-aqueous electrolyte cell and acting to prevent short-circuiting of current due to the contact between the electrodes. As a material of the separator are mentioned materials capable of surely preventing the contact between the electrodes and passing or impregnating the electrolyte such as non-woven fabrics, thin-layer films and the like made of synthetic resin such as polytetrafluoroethylene, polypropylene, polyethylene, cellulose based resin, polybutylene terephthalate, polyethylene terephthalate or the like. Among them, a microporous film having a thickness of about 20-50 μm and made of polypropylene or polyethylene, and a film made of cellulose based resin, polybutylene terephthalate, polyethylene terephthalate or the like are particularly preferable.

In the invention, various well-known members usually used in the cell can be favorably used in addition to the above separator.

-Form of non-aqueous electrolyte cell-

The form of the aforementioned non-aqueous electrolyte cell according to the invention is not particularly limited, and there are preferably mentioned various well-known forms such as coin type, button type, paper type, pentagon, cylindrical type of spiral structure and so on. In case of the button type, a non-aqueous electrolyte cell can be prepared by preparing sheet-shaped positive and negative electrodes, and sandwiching the separator between the positive and negative electrodes and the like. Also, in case of the spiral structure, a non-aqueous electrolyte cell can be prepared by preparing a sheet-shaped positive electrode, sandwiching between collectors, piling the negative electrode (sheet-shaped) thereon and then winding them or the like.

<Polymer cell>

The polymer cell according to the invention comprises a positive electrode, a negative electrode and a polymer electrolyte comprising the above support salt and a polymer, and is provided with other members usually used in the technical field of the polymer cell, if necessary.

-Positive electrode-

The positive electrode in the polymer cell of the invention is not particularly limited and can be properly selected from well-known positive electrode materials. For example, there are preferably mentioned metal oxides such as $V_2O_5$, $V_6O_{13}$, $MnO_2$, $MoO_3$ and the like; lithium-containing composite oxides such as $LiCoO_2$, $LiNiO_2$, $LiMn_2O_4$, $LiFeO_2$, $LiFePO_4$ and the like; metal sulfides such as $TiS_2$, $MoS_2$ and the like; electrically conductive polymers such as polyaniline and the like, and so on. The lithium-containing composite oxide may be a composite oxide containing two or three transition metals selected from the group consisting of Fe, Mn, Co and Ni. In the latter case, the composite oxide is represented by $LiFe_xCo_yNi_{(1-x-y)}O_2$ (wherein $0 \leq x < 1$, $0 \leq y < 1$, $0 < x+y \leq 1$), $LiMn_xFe_yO_{2-x-y}$ or the like. Among them, $LiCoO_2$, $LiNiO_2$ and $LiMn_2O_4$ are particularly preferable in a point that the capacity is high and the safety is high and the wettability of the electrolyte is excellent. These materials may be used alone or in a combination of two or more.

The positive electrode may be mixed with an electrically conducting agent and a binding agent, if necessary. As the electrically conducting agent are mentioned acetylene black and the like, and as the binding agent are mentioned polyvinylidene fluoride (PVDF), polytetrafluoroethylene (PTFE) and the like. In case of using these additives, they may be compounded in the same compounding ratio as in the conventional case, for example, positive electrode material: electrically conducting agent:binding agent = 8:1:1-8:1:0.2 (mass ratio).

The form of the positive electrode is not particularly limited and can be properly selected from the well-known forms as the electrode. For example, there are mentioned a sheet form, a column form, a plate form, a spiral form and the like. Among them, the sheet form or the like is preferable in a point of the thin-shaping of the cell.

-Negative electrode-

The negative electrode in the polymer cell of the invention is possible to occlude and release lithium, lithium ion or the like. Therefore, the material thereof is not particularly limited unless lithium, lithium ion or the like may be occluded and released, and can be properly selected from well-known negative electrode materials. For example, there are preferably mentioned lithium-containing materials, concretely lithium metal itself, an alloy of lithium with aluminum, indium, lead, zinc or the like, and a carbonaceous material such as graphite doped with lithium or the like. Among them, the carbonaceous material such as graphite or the like is preferable in a point that the safety is higher. These materials may be used alone or in a combination of two or more. The form of the negative electrode is not particularly limited and may be properly selected from the well-known forms likewise the form of the positive electrode.

-Polymer electrolyte-

The polymer electrolyte used in the polymer cell of the invention comprises a support salt of a compound represented by the above formula (I) or (II) and a polymer, and may contain other components, if necessary.

The compound of the formula (I) or (II) acts as an ion source for lithium ion because it contains lithium in its molecule and releases lithium ion in the polymer electrolyte, and can improve the electric conduction of the polymer electrolyte. Also, this compound has a phosphazene derivative as a basic skeleton, so that it has an action of controlling the combustion. Although there is a problem in the safety in the conventional polymer electrolyte impregnated and swollen with the aprotic organic solvent as previously mentioned, the polymer electrolyte containing the above support salt brings about the self-extinguishing property or flame retardance based on the action of nitrogen gas derived from the phosphazene derivative, so that the risk of ignition-fire is reduced and the safety is improved. Furthermore, since

phosphorus has an action of suppressing the chain decomposition of the high molecular weight material constituting a part of the cell, the self-extinguishing property or flame retardance can be effectively given to reduce the risk of ignition-fire.

The polymer electrolyte added with the above support salt is preferable to have a limit oxygen index of not less than 21 volume%. When the limit oxygen index is less than 21 volume%, the effect of suppressing the ignition-fire may be insufficient. Moreover, the definition of the limit oxygen index and the measuring method thereof are as previously mentioned.

--Polymer--

The polymer used in the electrolyte for the polymer cell of the invention is not particularly limited, and there can be mentioned all polymers usually used in the polymer cell. For example, there are polyethylene oxide, polyacrylate, polypropylene oxide, polyacrylonitrile, polyacrylate containing ethylene oxide unit and the like. Among them, polyethylene oxide and polypropylene oxide are particularly preferable in a point that they are electrically stable.

The polymer is preferable to have a weight average molecular weight of not less than 100000, particularly not less than 5000000. When the weight average molecular weight is less than 100000, the strength is weak, and it may become at a state near to sol rather than gel.

The amount of the polymer to a total amount of the polymer and the support salt in the polymer electrolyte is preferably 80-95% by mass, more preferably about 90% by mass. When the amount of the polymer is less than 80% by mass, the strength of the electrolyte lowers, while when it exceeds 95% by mass, the electric conductivity may lower.

-Other component-

As the other component included in the electrolyte for the polymer cell of the invention, an aprotic organic solvent is particularly preferable. Since lithium or lithium alloy is used in the negative electrode of the polymer cell as previously mentioned, the reactivity with water is vary high, and hence it is necessary to use an aprotic organic solvent not reacting with lithium or lithium alloy as a solvent impregnated in the polymer electrolyte. Also, an ion conduction can be easily improved by including the aprotic organic solvent in the polymer electrolyte.

The aprotic organic solvent is not particularly limited, and includes an ether compound, an ester compound and the like. There are concretely and preferably mentioned 1,2-dimethoxyethane (DME), tetrahydrofuran, dimethyl carbonate, diethyl carbonate (DEC), diphenyl carbonate, ethylene carbonate (EC), propylene carbonate (PC), γ-butyrolactone (GBL), γ-valerolactone, methylethyl carbonate, ethylmethyl carbonate and the like. Among them, a cyclic ester compound such as ethylene carbonate, propylene carbonate, γ-butyrolactone or the like, a chain ester compound such as dimethyl carbonate, ethylmethyl carbonate, diethyl carbonate or the like, and a chain ether compound such as 1,2-dimethoxyethane or the like are preferable. Particularly, the cyclic ester compound is preferable in a point that the dielectric constant is high and the solubility of the above support salt is excellent, while the chain ester compound and ether compound are preferable in a point that the viscosity is low and the impregnation is easy. They may be used alone or in a combination of two or more.

The viscosity at 25°C of the aprotic organic solvent is not particularly limited, but is preferably not more than 10 mPa·s (10 cP), more preferably not more than 5 mPa·s (5 cP).

-Phosphazene derivative and isomer of phosphazene derivative-

The above polymer electrolyte is preferable to further contain a phosphazene derivative and/or an isomer of a phosphazene derivative. By constituting the polymer electrolyte with the above support salt having an action of suppressing combustion can be reduced the risk of ignition-fire of the polymer cell provided with such an electrolyte, but this risk can be more surely reduced by further including the phosphazene derivative and/or the isomer of the phosphazene derivative in such an electrolyte as mentioned below.

That is, the phosphazene derivative and the isomer of the phosphazene derivative reduce the risk of ignition-fire of the polymer cell based on the same reasons as mentioned in the support salt. Also, the halogen (e.g. fluorine)-containing phosphazene derivative and the isomer of the phosphazene derivative act as an active radical catching agent in an accidental combustion, and the phosphazene derivative and the isomer of the phosphazene derivative having an organic substituent have an effect of shielding oxygen for forming a carbide (char) on the electrode material and the separator in the combustion.

In the conventional polymer cell containing lithium metal or the like as an active substance for negative electrode, lithium dissolved in the electrolyte in the form of an ion during the discharge is partly precipitated as dendrite (dendric crystal) in the recharge to cause a problem bringing about internal short-circuiting, explosion and the like. However, by including the phosphazene derivative and/or the isomer of the phosphazene derivative in the electrolyte, there can be provided a safe and long-life cell in which the precipitation of dendrite is effectively suppressed and there is no risk of

internal short-circuiting, explosion and the like in the cell.

As the phosphazene derivative and the isomer of the phosphazene derivative included in the electrolyte for the polymer cell of the invention can be mentioned the same compounds as described in the aforementioned non-aqueous electrolyte cell. Among them, they are preferable to be liquid at room temperature (25°C), and further the chain phosphazene derivative of the formula (VIII) and the cyclic phosphazene derivative of the formula (IX) are preferable in a point that the effect of suppressing the precipitation of dendrite and the safety are excellent. Also, preferable ones for the electrolyte of the non-aqueous electrolyte cell are preferable for the polymer electrolyte, and particularly preferable ones for the non-aqueous electrolyte secondary cell are preferable for the polymer electrolyte.

Moreover, the phosphazene derivatives of the formula (IX) in which $R^4$ is at least one of alkoxy group, phenoxy group and fluorine and at least one of all $R^4$s is fluorine and at least the other one is either alkoxy group or phenoxy group are preferable from a viewpoint that the precipitation of dendrite in the polymer cell can be particularly effectively suppressed and the like.

A total amount of the phosphazene derivative and the isomer of the phosphazene derivative in the polymer electrolyte is shown below. As the total amount of the phosphazene derivative and the isomer of the phosphazene derivative in the polymer electrolyte are mentioned a first amount capable of "preferably suppressing the precipitation of dendrite" and a second amount capable of "preferably controlling combustion" in accordance with the effects obtained by including the phosphazene derivative and/or the isomer of the phosphazene derivative in the electrolyte.

From a viewpoint of "suppressing the precipitation of dendrite", the total amount of the phosphazene derivative and the isomer of the phosphazene derivative in the electrolyte is preferable to be not less than 0.5% by mass. When the total amount is less than 0.5% by mass, the effect of suppressing the precipitation of dendrite is insufficient.

From a viewpoint of "controlling combustion", the total amount of the phosphazene derivative and the isomer of the phosphazene derivative in the electrolyte is preferable to be not less than 2.5% by mass. When the total amount is less than 2.5% by mass, the effect of controlling the combustion of the electrolyte is insufficient.

The method of preparing the polymer electrolyte of the invention is not particularly limited, and there is mentioned a method wherein the polymer and the support salt are mixed at a mass ratio (polymer/support salt) of 9/1 and added and uniformly mixed with a volatile solvent and uniformly dissolved at about 80°C and heated to about 40°C under vacuum to vaporize the volatile solvent and dried and impregnated and swollen with the aprotic organic solvent and at least one of the phosphazene derivatives and the isomers of the phosphazene derivative to obtain a polymer electrolyte. As the volatile solvent are mentioned acetonitrile, alcohols and the like. Acetonitrile is preferable in a point of excellent solubility and the like.

The form of the polymer electrolyte is not particularly limited, but the sheet form or the like is preferable in a point of the thin-shaping of the cell.

-Other members-

As the other member used in the polymer cell of the invention are mentioned well-known various members usually used in the polymer cell.

-Form of polymer cell-

The form of the polymer cell of the invention is not particularly limited, and there are preferably mentioned various well-known forms such as coin type, button type, paper type, pentagon, cylindrical type of spiral structure and so on. In case of the spiral structure, a polymer cell can be prepared by preparing a sheet-shaped positive electrode, sandwiching between collectors, piling the negative electrode (sheet-shaped) thereon and then winding them or the like.

The following examples are given in illustration of the invention and are not intended as limitations thereof.

<Support salt>

(Synthesis Example 1 of support salt)

A compound represented by the following formula (XXI) is synthesized as follows. At first, a phosphazene derivative of the formula (III) in which all $A^2$s are Cl [made by Protein Chemical Co., Ltd.] (50.3 g, 0.2 mol) and aniline (167 g, 1.8 mol) are added to 150 mL of THF and reacted at 60°C for 10 hours. After the completion of the reaction, they are aged for 1 day and then a by-produced hydrochloric acid is evaporated off by heating and thereafter a hydrochloride of aniline is removed off through filtration. The resulting filtrate is sufficiently dehydrated and added with lithium methoxide (76 g, 2 mol) and reacted at 45°C for 5 hours. After the completion of the reaction, the isolation and purification are carried out by a recrystallization method to obtain the compound of the formula (XXI) (70.3 g, 96 mmol, yield: 48%):

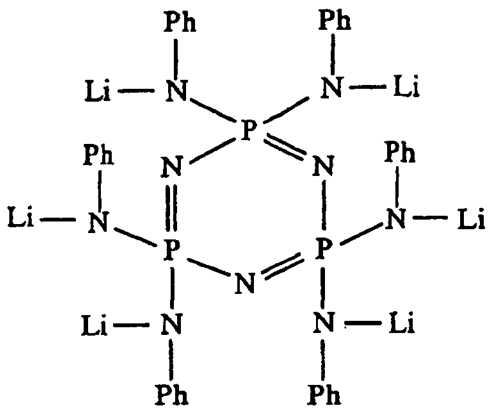

..... (XXI)

(wherein Ph is a phenyl group).

In this synthesis example, a broad absorption of NH-deformation vibration are observed at 1600-1700 $cm^{-1}$ in an infrared absorption spectrum of the reactive intermediate (before the reaction with lithium methoxide), but such an absorption is disappeared in the final purified product and an absorption based on C-N stretching vibration is strongly developed at 1080 $cm^{-1}$. Also, when the compound of this synthesis example is analyzed within a mass number range of 50-1000 under an ESI ionization condition by means of a Mariner TOF-MS apparatus made by PerSeptive Biosystem Corp., large mass number peaks are observed at 681, 625, 527, 429, 331, 233 and 135. The compound of the formula (XXI) has a molecular weight of 723 and also a mass of a fragment after the slip of 6 Li or 1-6 NPhLi from the compound is coincident with the above analytical value, so that the compound obtained by this synthesis example is judged to be the compound of the formula (XXI).

(Synthesis Example 2 of support salt)

A compound represented by the following formula (XXII) is synthesized as follows. At first, a phosphazene derivative of the formula (VI) in which all $A^2$s are Cl [made by Nippon Kagaku Kogyo Co., Ltd.](54 g, 0.2 mol) and aniline (139 g, 1.5 mol) are added to 150 mL of THF and reacted at 60°C for 10 hours. After the completion of the reaction, the reaction liquid is aged for 1 day and a by-produced hydrochloric acid is distilled off and added with lithium methoxide (57 g, 1.5 mol), which are reacted at 50°C for 5 hours. After the completion of the reaction, the isolation and purification are carried out by a recrystallization method to obtain the compound of the formula (XXII) (69.8 g, 0.12 mmol, yield: 60%):

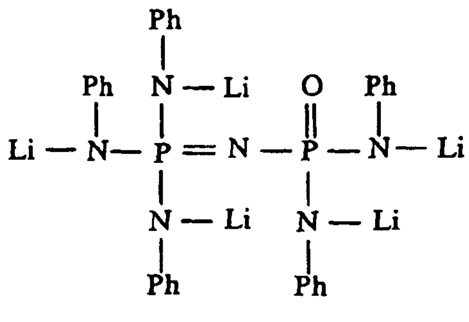

..... (XXII)

(wherein Ph is a phenyl group).

In this synthesis example, a broad absorption of NH-deformation vibration are observed at 1600-1700 $cm^{-1}$ in an infrared absorption spectrum of the reactive intermediate (before the reaction with lithium methoxide), but such an absorption is disappeared in the final purified product and an absorption based on C-N stretching vibration is strongly developed at 1080 $cm^{-1}$. Also, when the compound of this synthesis example is analyzed by means of the same apparatus as in Synthesis Example 1, large mass number peaks are observed at 547, 386, 288, 190 and 92. The compound of the formula (XXII) has a molecular weight of 582 and also a mass of a fragment after the slip of 5 Li or 2-5 NPhLi from the compound is coincident with the above analytical value, so that the compound obtained by this synthesis example is judged to be the compound of the formula (XXII).

(Synthesis Example 3 of support salt)

To 150 mL of acetonitrile are added a phosphazene derivative of the formula (III) in which all $A^2$s are Cl [made by Protein Chemical Corp.](50.3 g, 0.2 mol) and NaF [made by Kanto Kagaku Co., Ltd.] (58.8 g, 1.4 mol), which are reacted while refluxing at 60-80°C for 8 hours. After the completion of the reaction, the reaction product is purified by distillation at 50°C to obtain a phosphazene derivative of the formula (III) in which all $A^2$s are F.
Then, the phosphazene derivative of the formula (III) in which all $A^2$s are F (24.9 g, 0.1 mol), aniline (14 g, 0.15 mol) and potassium carbonate (27.6 g, 0.2 mol) are added to 75 mL of THF and reacted at 80°C for 10 hours. After the completion of the reaction, the reaction product is aged for 1 day and then by-produced potassium fluoride, potassium hydrogen carbonate and aniline salt and excessively added potassium carbonate are removed off by filtration. The filtrate is sufficiently dehydrated and added with lithium methoxide (5.7 g, 0.15 mol) and reacted at 45°C for 5 hours. After the completion of the reaction, the isolation and purification are carried out by a recrystallization method to obtain a compound Z of the formula (I) in which one of six $A^1$s is NPhLi and five thereof are F (19.7 g, 0.06 mol, yield: 60%).
When the compound of this synthesis example is analyzed by the same apparatus as in Synthesis Example 1, large mass number peaks are observed at 321, 233 and 230. The compound of the formula (I) in which one of six $A^1$s is NPhLi and five thereof are F has a molecular weight of 328 and also a mass of a fragment after the slip of 1 Li and 5 fluorine from the compound is coincident with the above analytical value, so that the compound obtained by this synthesis example is judged to be a compound of the formula (I) in which one of six $A^1$s is NPhLi and five thereof are F.

(Synthesis Example 4 of support salt)

The phosphazene derivative of the formula (III) in which all of $A^2$s are F obtained at a fluorination step of the above Synthesis Example 3 (24.9 g, 0.1 mol), aniline (42 g, 45 mol) and potassium carbonate (69 g, 0.5 mol) are added to 75 mL of THF and reacted at 80°C for 8 hours. After the completion of the reaction, the reaction product is aged for 1 day and then by-produced potassium fluoride, potassium hydrogen carbonate and aniline salt and excessively added potassium carbonate are removed off by filtration. The filtrate is sufficiently dehydrated and added with lithium methoxide (19.0 g, 0.5 mol) and reacted at 45°C for 5 hours. After the completion of the reaction, the isolation and purification are carried out by a recrystallization method to obtain a compound Y of the formula (I) in which three of six $A^1$s are NPhLi and three thereof are F (32.6 g, 0.067 mol, yield: 67%).
When the compound of this synthesis example is analyzed by the same apparatus as in Synthesis Example 1, large mass number peaks are observed at 465, 388, 290 and 192. The compound of the formula (I) in which three of six $A^1$s are NPhLi and three thereof are F has a molecular weight of 486 and also a mass of a fragment after the slip of 3 Li or 1-3 NPhLi from the compound is coincident with the above analytical value, so that the compound obtained by this synthesis example is judged to be a compound of the formula (I) in which three of six $A^1$s are NPhLi and three thereof are F.

(Synthesis Example 5 of support salt)

To 150 mL of acetonitrile are added a phosphazene derivative of the formula (VI) in which all of $A^2$s are Cl [made by Nippon Kagaku Kogyo Co., Ltd.](54 g, 0.2 mol) and NaF [made by Kanto Kagaku Co., Ltd.](58.8 g, 1.4 mol), which are reacted while refluxing at 90°C for 10 hours. After the completion of the reaction, the reaction product is purified by distillation at about 96°C to obtain a phosphazene derivative of the formula (VI) in which all of $A^2$s are F.
Then, the phosphazene derivative of the formula (VI) in which all of $A^2$s are F (37.4 g, 0.2 mol), aniline (28 g, 0.3 mol) and potassium carbonate (27.6 g, 0.2 mol) are added to 150 mL of THF and reacted at 60°C for 12 hours. After the completion of the reaction, the reaction product is aged for 1 day and then by-produced potassium fluoride, potassium hydrogen carbonate and aniline salt and excessively added potassium carbonate are removed off by filtration, and added with lithium methoxide (11.4 g, 0.3 mol) and reacted at 60°C for 5 hours. After the completion of the reaction, the isolation and purification are carried out by a recyrstallization method to obtain a compound X of the formula (II) in which one of five $A^1$s is NPhLi and four thereof are F (22.3 g, 0.084 mol, yield: 42%).
When the compound of this synthesis example is analyzed by the same apparatus as in Synthesis Example 1, large mass number peaks are observed at 259, 190 and 168. The compound of the formula (II) in which one of five $A^1$s is NPhLi and four thereof are F has a molecular weight of 266 and also a mass of a fragment after the slip of 1 Li, 1 NPhLi or four fluorine from the compound is coincident with the above analytical value, so that the compound obtained by this synthesis example is judged to be a compound of the formula (II) in which one of five $A^1$s is NPhLi and four thereof are F.

(Synthesis Example 6 of support salt)

The phosphazene derivative of the formula (VI) in which all of $A^2$s are F obtained at a fluorination step of Synthesis Example 5 (37.4 g, 0.2 mol), aniline (84 g, 0.9 mol) and potassium carbonate (138 g, 1.0 mol) are added to 150 mL of THF and reacted while refluxing for 16 hours. After the completion of the reaction, the reaction product is aged for 1 day and then by-produced potassium fluoride, potassium hydrogen carbonate and aniline salt and excessively added potassium carbonate are removed off by filtration, and added with lithium methoxide (34.2 g, 0.9 mol) and reacted at 60°C for 5 hours. After the completion of the reaction, the isolation and purification are carried out by a recyrstallization method to obtain a compound W of the formula (II) in which three of five $A^1$s are NPhLi and two thereof are F (59.4 g, 0.14 mol, yield: 70%).

When the compound of this synthesis example is analyzed by the same apparatus as in Synthesis Example 1, large mass number peaks are observed at 403, 326, 228 and 130. The compound of the formula (II) in which three of five $A^1$s are NPhLi and two thereof are F has a molecular weight of 424 and also a mass of a fragment after the slip of 3 Li or 1-3 NPhLi from the compound is coincident with the above analytical value, so that the compound obtained by this synthesis example is judged to be a compound of the formula (II) in which three of five $A^1$s are NPhLi and two thereof are F.

<Non-aqueous electrolyte primary cell>

(Example 1)

A positive electrode is prepared by mixing and kneading manganese dioxide [EMD, made by Mitsui Mining Co., Ltd.], acetylene black and polytetrafluoroethylene (PTFE) at a ratio of 8:1:1 (mass ratio), applying the kneaded mass with a doctor blade, drying in hot air (100-120°C) and cutting out through a punching machine of $\phi$ 16 mm. Moreover, a mass of the positive electrode is 20 mg.

A negative electrode is used by punching a lithium foil (thickness: 0.5 mm) at $\phi$ 16 mm, and a nickel foil is used as a collector. Also, an electrolyte is prepared by dissolving the compound of the formula (XXI) (support salt) into a mixed solution of propylene carbonate (PC) and dimethoxyethane (DME) (volume ratio: PC/DME=50/50) at a concentration of 0.25 mol/L(M).

As a separator is used a cellulose separator [TF4030, made by Nippon Kodo Kami-kogyo Co., Ltd.], through which are set the above positive and negative electrodes opposite to each other, and the electrolyte is poured thereinto and sealed to prepare a lithium primary cell of CR2016 model (non-aqueous electrolyte primary cell).

With respect to the thus obtained lithium primary cell, initial cell characteristics at 25°C (voltage, internal resistance) are measured and evaluated, and thereafter average discharge potential and discharge capacity at room temperature are measured and evaluated by the following evaluation methods. Also, limit oxygen index of the electrolyte used in the cell is measured by the following evaluation method according to JIS K7201. The results are shown in Table 1.

-Evaluation of average discharge potential-

In a discharge curve obtained when discharge is conducted to the positive electrode material under a condition of 0.2C, a potential in the holding of flat state on the curve is evaluated as an average discharge potential.

-Evaluation of discharge capacity at room temperature-

A discharge capacity at room temperature is measured by discharging the cell to 1.5 V (lower limit voltage) in an atmosphere of 25°C at a constant current of 1 mA (0.2C).

-Measurement of limit oxygen index-

A test specimen is prepared by reinforcing a $SiO_2$ sheet (quartz filter paper, incombustible) of 127 mm x 12.7 mm with U-shaped aluminum foil into a self-supported state and impregnating such a $SiO_2$ sheet with 1.0 mL of the electrolyte. The test specimen is vertically attached to a test specimen supporting member so as to position at a distance separated from an upper end portion of a combustion cylinder (inner diameter: 75 mm, height: 450 mm, equally filled with glass particles of 4 mm in diameter from a bottom to a thickness of 100$\pm$5 mm, and placed a metal net thereon) to not less than 100 mm. Then, oxygen (equal to or more than JIS K1101) and nitrogen (equal to or more than grade 2 of JIS K1107) are flown through the combustion cylinder and the test specimen is ignited in air (heat source is Type 1, No. 1 of JIS K2240) to examine combustion state. Moreover, a total flow amount in the combustion cylinder is 11.4 L/min. The test is repeated three times to measure an average value.

The oxygen index means a value of a minimum oxygen concentration required for maintaining combustion of a material under given test conditions defined in JIS K7201 and represented by a volume percentage. The limit oxygen index according to the invention is calculated form minimum oxygen flow amount required for continuing the combustion of the test specimen over 3 minutes or more or continuing the combustion after the firing so as to maintain the combustion length of not less than 50 mm and minimum nitrogen flow amount at this time.

$$\text{Equation: Limit oxygen index} = [\text{Oxygen flow amount}] / ([\text{Oxygen flow amount}]+[\text{Nitrogen flow amount}]) \times 100 \text{ (volume\%)}$$

(Example 2)

A lithium primary cell is prepared in the same manner as in Example 1 except that the compound of the formula (XXII) is used instead of the compound of the formula (XXI) as a support salt, and various cell characteristics and limit oxygen index are measured and evaluated in the same manner. The results are shown in Table 1.

(Conventional Example 1)

A lithium primary cell is prepared in the same manner as in Example 1 except that an electrolyte is prepared by dissolving $LiCF_3SO_3$ in a mixed solution of propylene carbonate (PC) and dimethoxyethane (DME) (volume ratio: PC/DME = 50/50) at a concentration of 0.75 mol/L(M), and various cell characteristics and limit oxygen index are measured and evaluated in the same manner. The results are shown in Table 1.

(Example 3)

A lithium primary cell is prepared in the same manner as in Example 1 except that an electrolyte is prepared by dissolving the compound of the formula (XXI) (support salt) in a mixed solution of 10 volume% of the phosphazene derivative A (a cyclic phosphazene derivative compound of the formula (XI) in which n is 3 and two of six $R^5$s are ethoxy group and four thereof are fluorine, viscosity at 25°C: 1.2 mPa · s (1.2 cP)) and 90 volume% of a mixed solution of propylene carbonate (PC) and dimethoxyethane (DME)(volume ratio: PC/DME = 50/50) at a concentration of 0.25 mol/L (M), and various cell characteristics and limit oxygen index are measured and evaluated in the same manner. The results are shown in Table 1.

(Example 4)

A lithium primary cell is prepared in the same manner as in Example 3 except that the phosphazene derivative B (a cyclic phosphazene derivative compound of the formula (XI) in which n is 4 and one of eight $R^5$s is ethoxy group and seven thereof are fluorine, viscosity at 25°C: 1.3 mPa · s (1.3 cP)) is used instead of the phosphazene derivative A in the preparation of the electrolyte, and various cell characteristics and limit oxygen index are measured and evaluated in the same manner. The results are shown in Table 1.

(Example 5)

A lithium primary cell is prepared in the same manner as in Example 3 except that the compound of the formula (XXII) is used instead of the compound of the formula (XXI) as a support salt, and various cell characteristics and limit oxygen index are measured and evaluated in the same manner. The results are shown in Table 1.

(Example 6)

A lithium primary cell is prepared in the same manner as in Example 4 except that the compound of the formula (XXII) is used instead of the compound of the formula (XXI) as a support salt, and various cell characteristics and limit oxygen index are measured and evaluated in the same manner. The results are shown in Table 1.

Table 1

| | Support salt | Phosphazene included in electrolyte | Initial potential (V) | Internal resistance (Ω) | Average discharge potential (V) | Discharge capacity at room temperature (mAh/g) | Limit oxygen index (volume %) |
|---|---|---|---|---|---|---|---|
| Conventional Example 1 | $LiCF_3SO_3$ | - | 3.46 | 0.12 | 2.80 | 225 | 18.6 |
| Example 1 | Formula (XXI) | - | 3.57 | 0.13 | 2.94 | 231 | 22.4 |
| Example 2 | Formula (XXII) | - | 3.61 | 0.10 | 2.95 | 238 | 22.2 |
| Example 3 | Formula (XXI) | Phosphazene A | 3.64 | 0.12 | 2.95 | 239 | 24.8 |
| Example 4 | Formula (XXI) | Phosphazene B | 3.65 | 0.12 | 2.97 | 241 | 25.8 |
| Example 5 | Formula (XXII) | Phosphazene A | 3.62 | 0.12 | 2.96 | 239 | 24.6 |
| Example 6 | Formula (XXII) | Phosphazene B | 3.61 | 0.13 | 2.94 | 245 | 25.6 |

(Examples 7-10)

A lithium primary cell is prepared in the same manner as in Example 1 except that each of compounds described in Table 2 is used instead of the compound of the formula (XXI) as a support salt and a concentration of this support salt is a concentration shown in Table 2, and various cell characteristics and limit oxygen index are measured and evaluated in the same manner. The results are shown in Table 2.

(Examples 11-14)

A lithium primary cell is prepared in the same manner as in Example 3 except that each of compounds described in Table 2 is used instead of the compound of the formula (XXI) as a support salt and a concentration of this support salt is a concentration shown in Table 2, and various cell characteristics and limit oxygen index are measured and evaluated in the same manner. The results are shown in Table 2.

(Examples 15-18)

A lithium primary cell is prepared in the same manner as in Example 4 except that each of compounds described in Table 2 is used instead of the compound of the formula (XXI) as a support salt and a concentration of this support salt is a concentration shown in Table 2, and various cell characteristics and limit oxygen index are measured and evaluated in the same manner. The results are shown in Table 2.

Table 2

| | Support salt | Concentration of support salt (mol/L) | Phosphazene included in electrolyte | Initial potential (V) | Internal resistance (Ω) | Average discharge potential (V) | Discharge capacity at room temperature (mAh/g) | Limit oxygen index (volume %) |
|---|---|---|---|---|---|---|---|---|
| Conventional Example 1 | $LiCF_3SO_3$ | 0.75 | - | 3.46 | 0.12 | 2.80 | 225 | 18.6 |
| Example 7 | Compound Z | 1 | - | 3.54 | 0.12 | 2.91 | 241 | 23.1 |
| Example 8 | Compound Y | 0.5 | - | 3.55 | 0.13 | 2.95 | 243 | 22.9 |
| Example 9 | Compound X | 1 | - | 3.52 | 0.11 | 2.96 | 242 | 23.3 |
| Example 10 | Compound W | 0.5 | - | 3.57 | 0.13 | 2.96 | 246 | 22.6 |
| Example 11 | Compound Z | 1 | Phosphazene A | 3.61 | 0.12 | 2.95 | 248 | 25.7 |
| Example 12 | Compound Y | 0.5 | Phosphazene A | 3.59 | 0.11 | 2.94 | 241 | 25.1 |
| Example 13 | Compound X | 1 | Phosphazene A | 3.58 | 0.12 | 2.95 | 242 | 25.3 |
| Example 14 | Compound W | 0.5 | Phosphazene A | 3.52 | 0.12 | 2.94 | 242 | 25.7 |
| Example 15 | Compound Z | 1 | Phosphazene B | 3.57 | 0.13 | 2.96 | 242 | 26.1 |
| Example 16 | Compound Y | 0.5 | Phosphazene B | 3.56 | 0.13 | 2.97 | 243 | 25.9 |
| Example 17 | Compound X | 1 | Phosphazene B | 3.59 | 0.12 | 2.95 | 242 | 25.8 |
| Example 18 | Compound W | 0.5 | Phosphazene B | 3.61 | 0.11 | 2.96 | 245 | 26.0 |

<Non-aqueous electrolyte secondary cell>

(Example 19)

To 100 parts by mass of $LiCoO_2$ [made by Nippon Kagaku Kogyo Co., Ltd.] are added 10 parts by mass of acetylene black and 10 parts by mass of polytetrafluoroethylene (PTFE) and kneaded in an organic solvent (mixed solvent of 50/50 volume% of ethyl acetate and ethanol), which is rolled through rollers to prepare a thin-layer shaped positive electrode sheet having a thickness of 100 μm and a width of 40 mm. Thereafter, an aluminum foil (corrector) coated on its surfaces with an electrically conductive adhesive and having a thickness of 25 μm is sandwiched between the two positive electrode sheets and a lithium metal foil having a thickness of 150 μm is piled thereof through a separator (microporous film, made of polypropylene) having a thickness of 25 μm, which are wound to prepare a cylinder type electrode. A length of the positive electrode in the cylinder type electrode is about 260 mm.

An electrolyte is prepared by dissolving the compound of the formula (XXI) (support salt) in a mixed solution of 50 volume% of diethyl carbonate (DEC)and 50 volume% of ethylene carbonate (EC) at a concentration of 0.25 mol/L (M). This electrolyte is poured into the cylinder type electrode and sealing is carried out to prepare a size AA lithium secondary cell (non-aqueous electrolyte secondary cell).

With respect to the thus obtained lithium secondary cell, initial cell characteristics at 25°C (voltage, internal resistance) are measured and evaluated, and thereafter discharge-recharge cycle performance is measured and evaluated by the following evaluation method. Also, limit oxygen index of the electrolyte used in this cell is measured in the same manner as in Example 1. The results are shown in Table 3.

-Evaluation of discharge-recharge performance-

The cell is repeatedly subjected to discharge-recharge of 50 cycles in an atmosphere of 25°C under conditions of upper limit voltage: 4.3 V, lower limit voltage: 3.0 V, discharge current: 100 mA and recharge current: 50 mA to measure initial discharge-recharge capacity and discharge-recharge capacity after 50 cycles.

(Example 20)

A lithium secondary cell is prepared in the same manner as in Example 19 except that the compound of the formula (XXII) is used instead of the compound of the formula (XXI) as a support salt, and various cell characteristics and limit oxygen index are measured and evaluated in the same manner. The results are shown in Table 3.

(Conventional Example 2)

A lithium secondary cell is prepared in the same manner as in Example 19 except that an electrolyte is prepared by dissolving $LiBF_4$ in a mixed solution of 50 volume% of diethyl carbonate (DEC) and 50 volume% of ethylene carbonate (EC) at a concentration of 0.75 mol/L(M), and various cell characteristics and limit oxygen index are measured and evaluated in the same manner. The results are shown in Table 3.

(Example 21)

A lithium secondary cell is prepared in the same manner as in Example 19 except that an electrolyte is prepared by dissolving the compound of the formula (XXI) in a mixed solution of 10 volume% of a phosphazene derivative C (a cyclic phosphazene derivative compound of the formula (XI) in which n is 3 and one of six $R^5$s is ethoxy group and five thereof are fluorine, viscosity at 25°C: 1.2 mPa·s (1.2 cP)), 45volume% of diethyl carbonate (DEC) and 45 volume% of ethylene carbonate (EC) at a concentration of 0.25 mol/L(M), and various cell characteristics and limit oxygen index are measured and evaluated in the same manner. The results are shown in Table 3.

(Example 22)

A lithium secondary cell is prepared in the same manner as in Example 21 except that a phosphazene derivative D (a cyclic phosphazene derivative compound of the formula (XI) in which n is 3 and one of six $R^5$s is n-propoxy group and five thereof are fluorine, viscosity at 25°C: 1.1 mPa·s (1.1 cP)) is used instead of the phosphazene derivative C in the preparation of the electrolyte, and various cell characteristics and limit oxygen index are measured and evaluated in the same manner. The results are shown in Table 3.

(Example 23)

A lithium secondary cell is prepared in the same manner as in Example 21 except that the compound of the formula (XXII) is used instead of the compound of the formula (XXI) as a support salt, and various cell characteristics and limit oxygen index are measured and evaluated in the same manner. The results are shown in Table 3.

(Example 24)

A lithium secondary cell is prepared in the same manner as in Example 22 except that the compound of the formula (XXII) is used instead of the compound of the formula (XXI) as a support salt, and various cell characteristics and limit oxygen index are measured and evaluated in the same manner. The results are shown in Table 3.

Table 3

| | Support salt | Phosphazene included in electrolyte | Initial potential (V) | Internal resistance (Ω) | Average discharge potential (V) | Initial discharge-recharge capacity (mAh/g) | Discharge-recharge capacity after 50 cycles (mAh/g) | Limit oxygen index (volume %) |
|---|---|---|---|---|---|---|---|---|
| Conventional Example 2 | $LiBF_4$ | - | .86 | 0.12 | 4.1 | 143 | 130 | 19.0 |
| Example 19 | Formula (XXI) | - | 2.84 | 0.13 | 4.1 | 143 | 141 | 21.8 |
| Example 20 | Formula (XXII) | - | 2.82 | 0.12 | 4.1 | 144 | 141 | 21.4 |
| Example 21 | Formula (XXI) | Phosphazene C | 2.84 | 0.12 | 4.1 | 144 | 143 | 24.8 |
| Example 22 | Formula (XXI) | Phosphazene D | 2.84 | 0.11 | 4.1 | 144 | 143 | 25.0 |
| Example 23 | Formula (XXII) | Phosphazene C | 2.86 | 0.12 | 4.1 | 144 | 142 | 24.6 |
| Example 24 | Formula (XXII) | Phosphazene D | 2.84 | 0.11 | 4.1 | 144 | 143 | 24.8 |

(Examples 25-28)

A lithium secondary cell is prepared in the same manner as in Example 19 except that each of compounds described in Table 4 is used instead of the compound of the formula (XXI) as a support salt and a concentration of this support salt is a concentration shown in Table 4, and various cell characteristics and limit oxygen index are measured and evaluated in the same manner. The results are shown in Table 4.

(Examples 29-32)

A lithium secondary cell is prepared in the same manner as in Example 21 except that each of compounds described in Table 4 is used instead of the compound of the formula (XXI) as a support salt and a concentration of this support salt is a concentration shown in Table 4, and various cell characteristics and limit oxygen index are measured and evaluated in the same manner. The results are shown in Table 4.

(Examples 33-36)

A lithium secondary cell is prepared in the same manner as in Example 22 except that each of compounds described in Table 4 is used instead of the compound of the formula (XXI) as a support salt and a concentration of this support salt is a concentration shown in Table 4, and various cell characteristics and limit oxygen index are measured and evaluated in the same manner. The results are shown in Table 4.

Table 4

| | Support salt | Concentration of support salt (mol/L) | Phosphazene included in electrolyte | Initial potential (V) | Internal resistance (Ω) | Average discharge potential (V) | Initial discharge-recharge capacity (mAh/g) | Discharge-recharge capacity after 50 cycles (mAh/g) | Limit oxygen index (volume %) |
|---|---|---|---|---|---|---|---|---|---|
| Conventional Example 2 | $LiBF_4$ | 0.75 | - | 2.86 | 0.12 | 4.1 | 143 | 130 | 19.0 |
| Example 25 | Compound Z | 1 | - | 2.84 | 0.11 | 4.1 | 144 | 143 | 22.4 |
| Example 26 | Compound Y | 0.5 | - | 2.86 | 0.12 | 4.1 | 144 | 142 | 21.8 |
| Example 27 | Compound X | 1 | - | 2.87 | 0.12 | 4.1 | 143 | 141 | 22.4 |
| Example 28 | Compound W | 0.5 | - | 2.88 | 0.13 | 4.1 | 145 | 141 | 21.6 |
| Example 29 | Compound Z | 1 | Phosphazene C | 2.89 | 0.13 | 4.1 | 143 | 139 | 24.9 |
| Example 30 | Compound Y | 0.5 | Phosphazene C | 2.91 | 0.12 | 4.1 | 145 | 140 | 25.1 |
| Example 31 | Compound X | 1 | Phosphazene C | 2.91 | 0.13 | 4.1 | 144 | 141 | 25.1 |
| Example 32 | Compound W | 0.5 | Phosphazene C | 2.92 | 0.12 | 4.1 | 146 | 141 | 25.1 |
| Example 33 | Compound Z | 1 | Phosphazene D | 2.93 | 0.13 | 4.1 | 145 | 140 | 25.8 |
| Example 34 | Compound Y | 0.5 | Phosphazene D | 2.90 | 0.12 | 4.1 | 147 | 143 | 25.8 |
| Example 35 | Compound X | 1 | Phosphazene D | 2.93 | 0.13 | 4.1 | 146 | 143 | 26.1 |
| Example 36 | Compound W | 0.5 | Phosphazene D | 2.93 | 0.13 | 4.1 | 145 | 142 | 26.1 |

As seen from these results, the limit oxygen index of the electrolyte is raised and the safety of the cell is improved by use of the support salt according to the invention. Also, the support salt of the invention sufficiently acts as an ion source for lithium ion and can improve the electric conduction of the electrolyte, so that the cell characteristics of the cell using such a support salt are equal to the cell characteristics of the cell of the conventional example. Further, it has been understood that the limit oxygen index of the electrolyte is further raised and the safety of the cell is more improved by adding the phosphazene derivative to the electrolyte.

<Polymer cell>

(Example 37)

[Preparation of polymer electrolyte]

15 g of polyethylene oxide [made by Ardrich](Mw = 5000000-6000000) and 5 mmol of the compound of the formula (XXI) (support salt) are mixed and added with 10 mL of acetonitrile, which are uniformly mixed and dissolved at 80°C to obtain polyethylene oxide sol (containing polyethylene oxide and the compound of the formula (XXI)). This sol is heated to 40°C under vacuum to vaporize acetonitrile and dried. Thereafter, it is swollen by impregnating with 1 mL of a mixed solution of diethyl carbonate (DEC) and ethylene carbonate (EC) (DEC/EC = 1/1 (volume ratio)) to obtain a gel-like polymer electrolyte. A limit oxygen index of the polymer electrolyte is measured by a method defined in JIS K7201. The result is shown in Table 5.

[Preparation of polymer cell]

To 100 parts by mass of $LiCoO_2$ [made by Nippon Kagaku Kogyo Co., Ltd.] are added 10 parts by mass of acetylene black and 10 parts by mass of polytetrafluoroethylene (PTFE) and kneaded with an organic solvent (mixed solution of 50/50 volume% of ethyl acetate and ethanol), which is rolled through rollers to prepare a thin layer-shaped positive electrode sheet having a thickness of 100 μm and a width of 40 mm. Also, a graphite sheet having a thickness of 150 μm is used as a negative electrode.

Then, polyethylene oxide sol is prepared in the same manner as in the preparation of the above polymer electrolyte, and this sol is applied onto both surfaces of a polyethylene separator with a doctor blade so as to have a thickness of 150 μm and then acetonitrile is vaporized to prepare polyethylene oxide-lithium gel electrolyte (dry gel). This gel is sandwiched between the positive electrode sheet and the negative electrode (graphite sheet) and wound and further swollen by impregnating with a mixed solution of diethyl carbonate (DEC) and ethylene carbonate (EC) (DEC/EC = 1/1 (volume ratio)) to prepare a size AA polymer cell. A length of the positive electrode in the cell is about 260 mm.

With respect to the thus obtained cell, initial cell characteristics (voltage, internal resistance) are measured and evaluated, and then discharge-recharge cycle performance, low-temperature discharge characteristic, high-temperature storing property and effect of suppressing precipitation of dendrite are measured and evaluated by the following evaluation methods. The results are shown in Table 5.

-Evaluation of discharge-recharge cycle performance-

The discharge-recharge is repeated 50 cycles in an atmosphere of 25°C under conditions of upper limit voltage: 4.3 V, lower limit voltage: 3.0 V, discharge current: 100 mA and recharge current: 50 mA. A capacity reducing ratio after 50 cycles is calculated by comparing a discharge-recharge capacity with initial discharge-recharge capacity. The same measurement and evaluation are carried out on three cells in total to provide an average value, which is an evaluation of the discharge-recharge cycle performance.

-Evaluation of low-temperature discharge characteristic (Measurement of low-temperature discharge capacity)-

The cell is recharged at room temperature (25°C) and discharged at a low temperature (-20°C), and a discharge capacity at such a low temperature is compared with a discharge capacity of the cell subjected to discharge-recharge at 25°C to calculate a reducing ratio of discharge capacity bu the following equation. The same measurement and evaluation are carried out on three cells in total to provide an average value, which is an evaluation of the low-temperature discharge characteristic.

$$\text{Equation: Reducing ratio of discharge capacity} = 100 - (\text{low-temperature discharge capacity/discharge capacity } (25°C)) \times 100\ (\%)$$

-Evaluation of high-temperature storing property (Measurement-evaluation of discharge characteristic at room temperature after a high-temperature test)-

After the cell is stored at 80°C for 10 days, a discharge characteristic at room temperature (25°C) (discharge capacity (mAh/g) or the like) is measured and evaluated. In the measurement-evaluation of this discharge characteristic, an internal resistance (Ω, 25°C, 1 kHz impedance) at 50% discharge depth (state that 50% of full capacity is discharged) is also measured.

-Evaluation of effect for suppressing precipitation of dendrite-

After the discharge-recharge of 1C is repeated at 25°C 30 times, the cell is deconstructed to visually observe inner surfaces of the positive electrode and negative electrode. As a result, the precipitation of lithium is not particularly observed to cause no change.

(Example 38)

A polymer electrolyte and a polymer cell are prepared in the same manner as in Example 37 except that the compound of the formula (XXII) is used instead of the compound of the formula (XXI) as a support salt, and the limit oxygen index and various cell characteristics are measured and evaluated. Further, the presence or absence of dendrite precipitation is observed in the same manner as in Example 37 and as a result, the precipitation of lithium is not particularly observed to cause no change. These results are shown in Table 5.

(Conventional Example 3)

A polymer electrolyte and a polymer cell are prepared in the same manner as in Example 37 except that $LiPF_6$ is used instead of the compound of the formula (XXI) as a support salt, and the limit oxygen index and various cell characteristics are measured and evaluated. Further, the presence or absence of dendrite precipitation is observed in the same manner as in Example 37 and as a result, the growth of lithium crystal (dendrite) is confirmed on the surface of the negative electrode. Also, fine irregularity due to the precipitation of granular lithium is observed on the surface of the positive electrode. These results are shown in Table 5.

(Example 39)

[Preparation of non-aqueous electrolyte]

A non-aqueous electrolyte is prepared by adding 2.5 mL of a phosphazene derivative A (a cyclic phosphazene derivative compound of the formula (XI) in which n is 3 and two of six $R^5$s are ethoxy group and four thereof are fluorine, viscosity at 25°: 1.2 mPa·s (1.2 cP)) to a mixed solvent of diethyl carbonate (DEC) and ethylene carbonate (EC) (DEC/EC = 1/1 (volume ratio)).

[Preparation of polymer electrolyte]

A polymer electrolyte is prepared in the same manner as in Example 37 except that 1 mL of the above prepared non-aqueous electrolyte is impregnated instead of the mixed solution of diethyl carbonate (DEC) and ethylene carbonate (EC) (DEC/EC = 1/1 (volume ratio)), and the limit oxygen index of the polymer electrolyte is measured. The result is shown in Table 5.

[Preparation of polymer cell]

A polymer ell is prepared in the same manner as in Example 37 except that the above prepared non-aqueous electrolyte is impregnated and swollen instead of the mixed solution of diethyl carbonate (DEC) and ethylene carbonate (EC) (DEC/EC = 1/1 (volume ratio)), and various cell characteristics are measured and evaluated. Further, the presence or absence of dendrite precipitation is observed in the same manner as in Example 37 and as a result, the precipitation

of lithium is not particularly observed to cause no change. These results are shown in Table 5.

(Example 40)

A polymer electrolyte and a polymer cell are prepared in the same manner as in Example 37 except that a phosphazene derivative C (a cyclic phosphazene derivative compound of the formula (XI) in which n is 3 and one of six $R^5$s is ethoxy group and five thereof are fluorine, viscosity at 25°C: 1.2 mPa·s (1.2 cP)) is used instead of the phosphazene derivative A, and the limit oxygen index and various cell characteristics are measured and evaluated. Further, the presence or absence of dendrite precipitation is observed in the same manner as in Example 37 and as a result, the precipitation of lithium is not particularly observed to cause no change. These results are shown in Table 5.

(Example 41)

A polymer electrolyte and a polymer cell are prepared in the same manner as in Example 39 except that the compound of the formula (XXII) is used instead of the compound of the formula (XXI) as a support salt, and the limit oxygen index and various cell characteristics are measured and evaluated. Further, the presence or absence of dendrite precipitation is observed in the same manner as in Example 37 and as a result, the precipitation of lithium is not particularly observed to cause no change. These results are shown in Table 5.

(Example 42)

A polymer electrolyte and a polymer cell are prepared in the same manner as in Example 40 except that the compound of the formula (XXII) is used instead of the compound of the formula (XXI) as a support salt, and the limit oxygen index and various cell characteristics are measured and evaluated. Further, the presence or absence of dendrite precipitation is observed in the same manner as in Example 37 and as a result, the precipitation of lithium is not particularly observed to cause no change. These results are shown in Table 5.

Table 5

| | Support salt | Phosphazene included in electrolyte | Limit oxygen index (volume %) | Initial potential (V) | Initial internal resistance (Ω) | Cycle performance | Low-temperature discharge characteristic | High-temperature storing characteristics | | Precipitation of dendrite |
|---|---|---|---|---|---|---|---|---|---|---|
| | | | | | | Ratio of reducing discharge-recharge capacity (%) | Ratio of reducing discharge capacity (%) | Discharge capacity (mAh/g) | 1 kHz impedance (Ω) | |
| Conventional Example 3 | $LiPF_6$ | - | 17.4 | 3.02 | 0.12 | 12 | 68 | 78 | 122.1 | precipitate |
| Example 37 | Formula (XXI) | - | 21.8 | 2.89 | 0.12 | 5 | 55 | 112 | 71.5 | not precipitated |
| Example 38 | Formula (XXII) | - | 21.4 | 2.87 | 0.12 | 5 | 53 | 106 | 73.2 | not precipitated |
| Example 39 | Formula (XXI) | Phosphazene A | 23.2 | 2.80 | 0.11 | 4 | 38 | 118 | 58.1 | not precipitated |
| Example 40 | Formula (XXI) | Phosphazene C | 24.1 | 2.79 | 0.10 | 3 | 32 | 121 | 55.8 | not precipitated |
| Example 41 | Formula (XXII) | Phosphazene A | 23.0 | 2.81 | 0.10 | 4 | 35 | 119 | 59.0 | not precipitated |
| Example 42 | Formula (XXII) | Phosphazene C | 23.9 | 2.79 | 0.09 | 3 | 31 | 120 | 55.1 | not precipitated |

(Examples 43-46)

A polymer electrolyte and a polymer cell are prepared in the same manner as in Example 37 except that each of compounds described in Table 6 is used instead of the compound of the formula (XXI) as a support salt and a concentration of this support salt is a concentration shown in Table 6, and the limit oxygen index and various cell characteristics are measured and evaluated. Further, the presence or absence of dendrite precipitation is observed in the same manner as in Example 37 and as a result, the precipitation of lithium is not particularly observed to cause no change. These results are shown in Table 6.

(Examples 47-50)

A polymer electrolyte and a polymer cell are prepared in the same manner as in Example 39 except that each of compounds described in Table 6 is used instead of the compound of the formula (XXI) as a support salt and a concentration of this support salt is a concentration shown in Table 6, and the limit oxygen index and various cell characteristics are measured and evaluated. Further, the presence or absence of dendrite precipitation is observed in the same manner as in Example 37 and as a result, the precipitation of lithium is not particularly observed to cause no change. These results are shown in Table 6.

(Examples 51-54)

A polymer electrolyte and a polymer cell are prepared in the same manner as in Example 40 except that each of compounds described in Table 6 is used instead of the compound of the formula (XXI) as a support salt and a concentration of this support salt is a concentration shown in Table 6, and the limit oxygen index and various cell characteristics are measured and evaluated. Further, the presence or absence of dendrite precipitation is observed in the same manner as in Example 37 and as a result, the precipitation of lithium is not particularly observed to cause no change. These results are shown in Table 6.

Table 6

| | Support salt | Phosphazene included in electrolyte | Limit oxygen index (volume %) | Initial potential (V) | Initial internal resistance (Ω) | Cycle performance | Low-temperature discharge characteristic | High-temperature storing characteristics | | Precipitation of dendrite |
|---|---|---|---|---|---|---|---|---|---|---|
| | | | | | | Ratio of reducing discharge-recharge capacity (%) | Ratio of reducing discharge capacity (%) | Discharge capacity (mAh/g) | 1 kHz impedance (Ω) | |
| Conventional Example 3 | $LiPF_6$ | - | 17.4 | 3.02 | 0.12 | 12 | 68 | 78 | 122.1 | precipitate |
| Example 43 | Compound Z | - | 23.0 | 2.84 | 0.11 | 3 | 35 | 111 | 26.8 | not precipitated |
| Example 44 | Compound Y | - | 22.9 | 2.84 | 0.11 | 2 | 38 | 119 | 27.2 | not precipitated |
| Example 45 | Compound X | - | 22.6 | 2.86 | 0.11 | 4 | 35 | 115 | 27.8 | not precipitated |
| Example 46 | Compound W | - | 22.0 | 2.85 | 0.11 | 3 | 26 | 121 | 22.0 | not precipitated |
| Example 47 | Compound Z | Phosphazene A | 24.6 | 2.87 | 0.12 | 3 | 26 | 121 | 22.0 | not precipitated |
| Example 48 | Compound Y | Phosphazene A | 24.9 | 2.85 | 0.11 | 4 | 24 | 120 | 22.2 | not precipitated |
| Example 49 | Compound X | Phosphazene A | 24.9 | 2.83 | 0.11 | 4 | 27 | 123 | 20.0 | not precipitated |
| Example 50 | Compound W | Phosphazene A | 25.0 | 2.83 | 0.10 | 3 | 25 | 122 | 23.1 | not precipitated |
| Example 51 | Compound Z | Phosphazene C | 25.0 | 2.83 | 0.10 | 2 | 20 | 126 | 19.5 | not precipitated |
| Example 52 | Compound Y | Phosphazene C | 25.0 | 2.80 | 0.10 | 3 | 18 | 127 | 18.4 | not precipitated |

(continued)

| | Support salt | Phosphazene included in electrolyte | Limit oxygen index (volume %) | Initial potential (V) | Initial internal resistance (Ω) | Cycle performance | Low-temperature discharge characteristic | High-temperature storing characteristics | | Precipitation of dendrite |
|---|---|---|---|---|---|---|---|---|---|---|
| | | | | | | Ratio of reducing discharge-recharge capacity (%) | Ratio of reducing discharge capacity (%) | Discharge capacity (mAh/g) | 1 kHz impedance (Ω) | |
| Example 53 | Compound X | Phosphazene C | 24.9 | 2.80 | 0.10 | 2 | 19 | 125 | 19.0 | not precipitated |
| Example 54 | Compound W | Phosphazene C | 25.2 | 2.76 | 0.09 | 2 | 18 | 128 | 18.6 | not precipitated |

As seen from these results, by using the support salt consisting of the compound shown by the formula (I) or (II) is raised the limit oxygen index of the polymer electrolyte and the safety of the polymer cell provided with such an electrolyte is improved. Also, since the support salt consisting of the compound of the formula (I) or (II) sufficiently acts as an ion source for lithium ion and can improve the electric conduction of the polymer electrolyte, it has been understood that the cell characteristics of the polymer cell using this support salt are equal to the cell characteristics of the polymer cell of the conventional example. Furthermore, it has been seen that the limit oxygen index of the electrolyte is further raised and the safety of the cell is more improved by impregnating and swelling with the aprotic organic solvent added with the phosphazene derivative.

## INDUSTRIAL APPLICABILITY

According to the invention, it is possible to provide a support salt which can be used in a non-aqueous electrolyte and a polymer electrolyte to suppress the combustion of the non-aqueous electrolyte and the polymer electrolyte. Also, a non-aqueous electrolyte cell having a high safety can be provided by constituting the non-aqueous electrolyte cell with such a support salt. Furthermore, a non-aqueous electrolyte cell having a considerably high safety can be provided by adding a phosphazene derivative and/or an isomer of a phosphazene derivative to the electrolyte of such a cell.

By using the above support salt in an electrolyte of a polymer cell can be provided a polymer cell in which the flame retardance is excellent, and the risk of ignition-fire is not caused and the safety is high, and the leakage of the electrolyte is not caused, and the miniaturization and thinning are possible, and the assembling onto various equipments is easy. Moreover, a polymer cell more surely reducing the risk of ignition-fire and improving the safety can be provided by including a phosphazene derivative and/or an isomer of a phosphazene derivative into the polymer electrolyte.

## Claims

1. The use of a compound represented by the following formula (I) for a support salt of a non-aqueous electrolyte cell or a polymer cell, wherein the compound represented by the formula (I) is produced by a method which comprises the steps of:

   (i) a step of reacting a phosphazene derivative represented by the following formula (III) with a primary amine represented by the following formula (IV) to produce a phosphazene derivative represented by the following formula (V); and
   (ii) a step of adding the phosphazene derivative of the formula (V) with a lithium alkoxide to produce the compound represented by the formula (I):

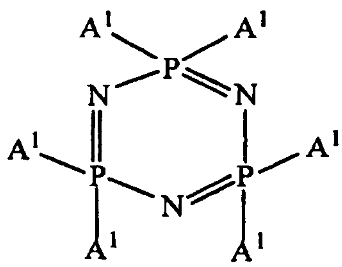

····· (I)

(wherein $A^1$ is independently NRLi or F, and at least one $A^1$ is NRLi, and R is an alkyl group or an aryl group)

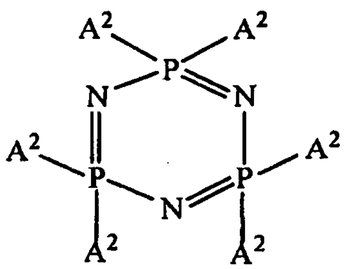

····· (III)

(wherein $A^2$ is F or Cl)

$R-NH_2$ (IV)

(wherein R is an alkyl group or an aryl group)

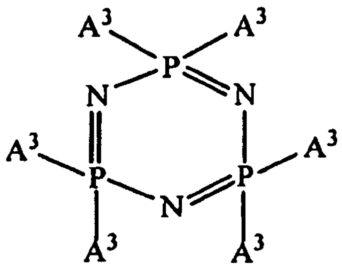

..... (V)

(wherein $A^3$ is independently NHR or F, and at least one $A^3$ is NHR, and R is an alkyl group or an aryl group).

2. The use of the compound represented by the formula (I) for the support salt as claimed in claim 1, wherein the primary amine of the formula (IV) is aniline.

3. The use of a compound represented by the following formula (II) for a support salt of a non-aqueous electrolyte cell or a polymer cell, wherein the compound represented by the formula (II) is produced by a method which comprises the steps of:

(i) a step of reacting a phosphazene derivative represented by the following formula (VI) with a primary amine represented by the following formula (IV) to produce a phosphazene derivative represented by the following formula (VII); and
(ii) a step of adding the phosphazene derivative of the formula (VII) with a lithium alkoxide to produce the compound represented by the formula (II):

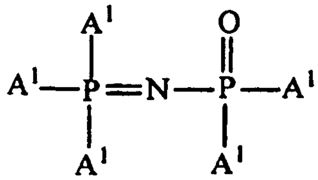

..... (II)

(wherein $A^1$ is independently NRLi or F, and at least one $A^1$ is NRLi, and R is an alkyl group or an aryl group),

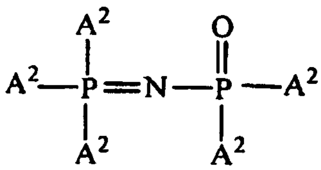

..... (VI)

(wherein $A^2$ is F or Cl)

$R-NH_2$ (IV)

(wherein R is an alkyl group or an aryl group)

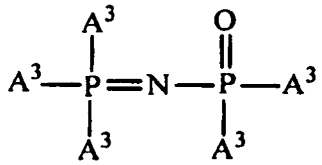

..... (VII)

(wherein $A^3$ is independently NHR or F, and at least one $A^3$ is NHR, and R is an alkyl group or an aryl group).

**4.** The use of the compound represented by the formula (II) for the support salt as claimed in claim 3, wherein the primary amine of the formula (IV) is aniline.

**5.** A non-aqueous electrolyte cell comprising a positive electrode, a negative electrode and a non-aqueous electrolyte comprising at least one aprotic organic solvent and a support salt, wherein the aprotic organic solvent is selected from the group consisting of 1,2-dimethoxyethane, tetrahydrofuran, dimethyl carbonate, diethyl carbonate, diphenyl carbonate, ethylene carbonate, propylene carbonate, γ-butyrolactone, γ-valerolactone, methylethyl carbonate and ethylmethyl carbonate, and
wherein the support salt comprises a compound represented by the following formula (I) or (II):

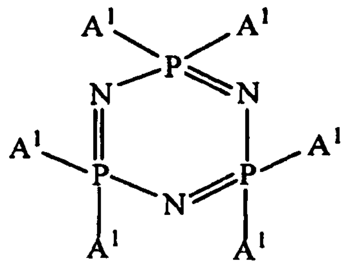

..... (I)

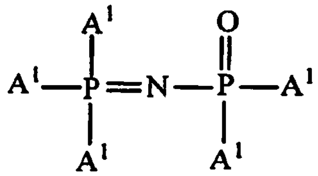

..... (II)

(in the formulae (I) and (II), $A^1$ is independently NRLi or F, and at least one $A^1$ is NRLi, and R is an alkyl group or an aryl group).

**6.** A non-aqueous electrolyte cell as claimed in claim 5, wherein a phosphazene derivative is added to the aprotic organic solvent and the phosphazene derivative has a viscosity at 25°C of not more than 300 mPa·s (300 cP) and is represented by the following formula (VIII) or (IX):

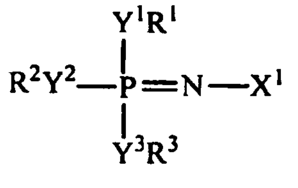

..... (VIII)

(wherein $R^1$, $R^2$ and $R^3$ are independently an alkoxy group, an alkyl group, a carboxyl group, an acyl group or an aryl group or a halogen element, and
$X^1$ is a substituent containing at least one element selected from the group consisting of carbon, silicon, germanium, tin, nitrogen, phosphorus, arsenic, antimony, bismuth, oxygen, sulfur, selenium, tellurium and polonium, and $Y^1$, $Y^2$ and $Y^3$ are independently $CH_2$ group, a bivalent connecting group containing at least one element selected from the group consisting of oxygen, sulfur, selenium, nitrogen, boron, aluminium, scandium, gallium, yttrium, indium, lanthanum, thallium, carbon, silicon, titanium, tin, germanium, zirconium, lead, phosphorus, vanadium, arsenic, niobium, antimony, tantalum, bismuth, chromium, molybdenum, tellurium, polonium, tungsten, iron, cobalt

and nickel, a bivalent element which is oxygen, sulfur or selenium or a single bond)

$(NPR^4{}_2)_n$ (IX)

(wherein $R^4$ is independently an alkoxy group, an alkyl group, a carboxyl group, an acyl group or an aryl group or a halogen element, and n is 3-15).

**7.** A non-aqueous electrolyte cell as claimed in claim 6, wherein the phosphazene derivative of the formula (IX) is represented by the following formula (X):

$(NPF_2)_n$ (X)

(wherein n is 3-13).

**8.** A non-aqueous electrolyte cell as claimed in claim 6, wherein the phosphazene derivative of the formula (IX) is represented by the following formula (XI):

$(NPR^5{}_2)_n$ (XI)

(wherein $R^5$ is independently an alkoxy group, an alkyl group, an acyl group, an aryl group, a carboxyl group or fluorine, and at least one of all $R^5$s is a fluorine containing alkoxy group, a fluorine containing alkyl group, a fluorine containing acyl group, a fluorine containing aryl group or fluorine, and n is 3-8, provided that all of $R^5$s are not fluorine).

**9.** A non-aqueous electrolyte cell as claimed in claim 5, wherein a e phosphazene derivative is added to the aprotic solvent and the phosphazene derivative is a solid at 25°C and is represented by the following formula (XII):

$(NPR^6{}_2)_n$ (XII)

(wherein $R^6$ is independently an alkoxy group, an alkyl group, a carboxyl group, an acyl group, an aryl group or a halogen element, and n is 3-6).

**10.** A non-aqueous electrolyte cell as claimed in claim 5, wherein an isomer of a phosphazene derivative is added to the aprotic organic solvnet, and the isomer of the phosphazene derivative is represented by the following formula (XIII) and is an isomer of a phosphazene derivative represented by the following formula (XIV):

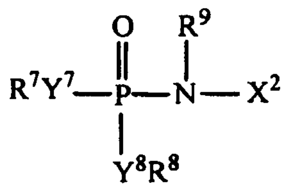

····· (XIII)

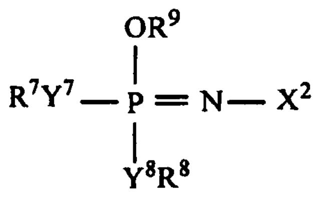

····· (XIV)

(in the formulae (XIII) and (XIV), $R^7$, $R^8$ and $R^9$ are independently an alkoxy group, an alkyl group, a carboxyl group, an acyl group, an aryl group or a halogen element, and $X^2$ is a substituent containing at least one element selected from the group consisting of carbon, silicon, germanium, tin, nitrogen, phosphorus, arsenic, antimony, bismuth, oxygen, sulfur, selenium, tellurium and polonium, and $Y^7$ and $Y^8$ are independently $CH_2$ group, a bivalent connecting group containing at least one element selected from the group consisting of oxygen, sulfur, selenium, nitrogen, boron, aluminium, scandium, gallium, yttrium, indium, lanthanum, thallium, carbon, silicon, titanium, tin, germanium, zirconium, lead, phosphorus, vanadium, arsenic, niobium, antimony, tantalum, bismuth, chromium,

molybdenum, tellurium, polonium, tungsten, iron, cobalt and nickel, a bivalent element which is oxygen, sulfur or selenium or a single bond).

**11.** A polymer cell comprising a positive electrode, a negative electrode, an electrolyte comprising a support salt and a polymer, wherein the support salt comprises a compound represented by the following formula (I) or (II):

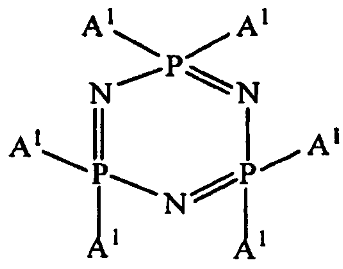

..... (I)

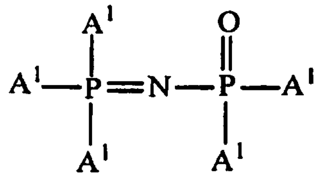

..... (II)

(in the formulae (I) and (II), $A^1$ is independently NRLi or F, and at least one $A^1$ is NRLi, and R is an alkyl group or an acyl group).

**12.** A polymer cell as claimed in claim 11, wherein the polymer is at least one of polyethylene oxide, polyacrylate and polypropylene oxide.

**13.** A polymer cell as claimed in claim 11 or 12, wherein the polymer has a weight average molecular weight of not less than 10000.

**14.** A polymer cell as claimed in claim 13, wherein the weight average molecular weight of the polymer is not less than 5000000.

**15.** A polymer cell as claimed in any of claims 11 to 14, wherein an amount of the polymer to a total amount of the polymer and the support salt is 80-95% by mass.

**16.** A polymer cell as claimed in any of claims 11 to 15, wherein the electrolyte further contains a phosphazene derivative, and the phosphazene derivative has a viscosity at 25°C of not more than 300 mPa·s (300 cP) and is represented by the following formula (VIII) or (IX):

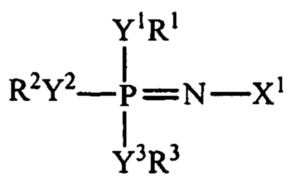

..... (VIII)

(wherein $R^1$, $R^2$ and $R^3$ are independently an alkoxy group, an alkyl group, a carboxyl group, an acyl group, an aryl group or a halogen element, and $X^1$ is a substituent containing at least one element selected from the group consisting of carbon, silicon, germanium, tin, nitrogen, phosphorus, arsenic, antimony, bismuth, oxygen, sulfur, selenium, tellurium and polonium, and $Y^1$, $Y^2$ and $Y^3$ are independently $CH_2$ group, a bivalent connecting group containing at least one element selected from the group consisting of oxygen, sulfur, selenium, nitrogen, boron, aluminium, scandium, gallium, yttrium, indium, lanthanum, thallium, carbon, silicon, titanium, tin, germanium, zirconium, lead, phosphorus, vanadium, arsenic, niobium, antimony, tantalum, bismuth, chromium, molybdenum, tellurium, polonium, tungsten, iron, cobalt and nickel, a bivalent element which is oxygen, sulfur or selenium or a

single bond)

$(NPR^42)_n$ (IX)

(wherein $R^4$ is independently an alkoxy group, an alkyl group, a carboxyl group, an acyl group, an aryl group or a halogen element, and n is 3-15).

**17.** A polymer cell as claimed in claim 16, wherein the phosphazene derivative of the formula (IX) is represented by the following formula (X):

$(NPF_2)_n$ (X)

(wherein n is 3-13).

**18.** A polymer cell as claimed in claim 1, wherein the phosphazene derivative of the formula (IX) is represented by the following formula (XI):

$(NPR^5{}_2)_n$ (XI)

(wherein $R^5$ is independently an alkoxy group, an alkyl group, an acyl group, an aryl group, a carboxyl group or fluorine, and at least one of all $R^5$s is a fluorine containing alkoxy group, a fluorine containing alkyl group, a fluorine containing acyl group, a fluorine containing aryl group or fluorine, and n is 3-8, provided that all of $R^5$s are not fluorine).

**19.** A polymer cell as claimed in any of claims 11 to 15, wherein the electrolyte further contains a phosphazene derivative, and the phosphazene derivative is a solid at 25°C and is represented by the following formula (XII):

$(NPR^6{}_2)_n$ (XII)

(wherein $R^6$ is independently an alkoxy group, an alkyl group, a carboxyl group, an acyl group, an aryl group or a halogen element, and n is 3-6).

**20.** A polymer cell as claimed in any of claims 11 to 15, wherein the electrolyte further contains an isomer of a phosphazene derivative, and the isomer of the phosphazene derivative is represented by the following formula (XIII) and is an isomer of a phosphazene derivative represented by the following formula (XIV):

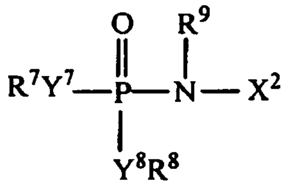

· · · · · (XIII)

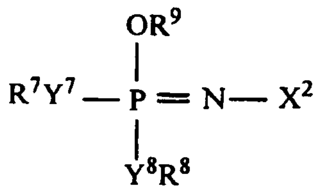

· · · · · (XIV)

(in the formulae (XIII) and (XIV), $R^7$, $R^8$ and $R^9$ are independently an alkoxy group, an alkyl group, a carboxyl group, an acyl group, an aryl group or a halogen element, and $X^2$ is a substituent containing at least one element selected from the group consisting of carbon, silicon, germanium, tin, nitrogen, phosphorus, arsenic, antimony, bismuth, oxygen, sulfur, selenium, tellurium and polonium, and $Y^7$ and $Y^8$ are independently $CH_2$ group, a bivalent connecting group containing at least one element selected from the group consisting of oxygen, sulfur, selenium, nitrogen, boron, aluminium, scandium, gallium, yttrium, indium, lanthanum, thallium, carbon, silicon, titanium, tin, germanium, zirconium, lead, phosphorus, vanadium, arsenic, niobium, antimony, tantalum, bismuth, chromium,

molybdenum, tellurium, polonium, tungsten, iron, cobalt and nickel, a bivalent element which is oxygen, sulfur or selenium or a single bond).

**21.** A polymer cell as claimed in any of claims 16 to 20, wherein a total content of the phosphazene derivative and the isomer of the phosphazene derivative in the electrolyte is at least 0.5% by mass.

**22.** A polymer cell as claimed in claim 21, wherein the total content of the phosphazene derivative and the isomer of the phosphazene derivative in the electrolyte is at least 2.5% by mass.

## Patentansprüche

**1.** Verwendung einer Verbindung, die durch die folgende Formel (I) dargestellt ist, für ein Trägersalz einer nichtwässrigen Elektrolytzelle oder einer Polymerzelle, wobei die Verbindung, die durch die Formel (I) dargestellt ist, durch ein Verfahren hergestellt wird, das folgende Schritte umfasst:

(i) einen Schritt des Reagierens eines Phosphazenderivats, das durch die folgende Formel (III) dargestellt ist, mit einem primären Amin, das durch die folgende Formel (IV) dargestellt ist, um ein Phosphazenderivat herzustellen, das durch die folgende Formel (V) dargestellt ist; und

(ii) einen Schritt des Versetzens des Phosphazenderivats der Formel (V) mit einem Lithiumalkoxid, um die Verbindung, die durch die folgende Formel (I) dargestellt ist:

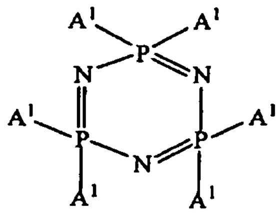

· · · · · (I)

herzustellen, (wobei $A^1$ unabhängig NRLi oder F ist und mindestens ein $A^1$ NRLi ist und R eine Alkylgruppe oder eine Arylgruppe ist)

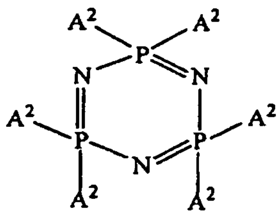

· · · · · (III)

(wobei $A^2$ F oder Cl ist)

$R\text{-}NH^2$ (IV)

(wobei R eine Alkylgruppe oder eine Arylgruppe ist)

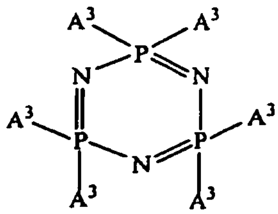

· · · · · (V)

(wobei $A^3$ unabhängig NHR oder F ist und mindestens ein $A^3$ NHR ist und R eine Alkylgruppe oder eine Arylgruppe ist).

**2.** Verwendung der Verbindung, die durch die Formel (I) dargestellt ist, für das Trägersalz nach Anspruch 1, wobei das primäre Amin der Formel (IV) Anilin ist.

**3.** Verwendung einer Verbindung, die durch die folgende Formel (II) dargestellt ist, für ein Trägersalz einer nichtwässrigen Elektrolytzelle oder einer Polymerzelle, wobei die Verbindung, die durch die folgende Formel (II) dargestellt ist, durch ein Verfahren hergestellt wird, das folgende Schritte umfasst:

(i) einen Schritt des Reagierens eines Phosphazenderivats, das durch die folgende Formel (VI) dargestellt ist, mit einem primären Amin, das durch die folgende Formel (IV) dargestellt ist, um ein Phosphazenderivat herzustellen, das durch die folgende Formel (VII) dargestellt ist; und
(ii) einen Schritt des Versetzens des Phosphazenderivats der Formel (VII) mit einem Lithiumalkoxid, um die Verbindung, die durch die folgende Formel (II) dargestellt ist:

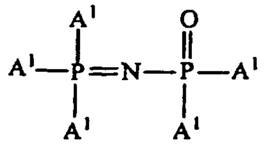 ····· (II)

herzustellen,
(wobei $A^1$ unabhängig NRLi oder F ist und mindestens ein $A^1$ NRLi ist und R eine Alkylgruppe oder eine Arylgruppe ist),

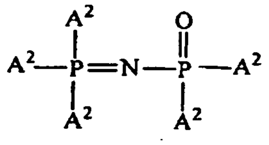 ····· (VI)

(wobei $A^2$ F oder Cl ist)

$R\text{-}NH_2$ (IV)

(wobei R eine Alkylgruppe oder eine Arylgruppe ist)

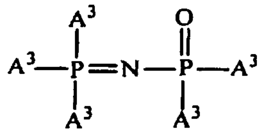 ····· (VII)

(wobei $A^3$ unabhängig NHR oder F ist und mindestens ein $A^3$ NHR ist und R eine Alkylgruppe oder eine Arylgruppe ist).

**4.** Verwendung der Verbindung, die durch die Formel (II) dargestellt ist, für das Trägersalz nach Anspruch 3, wobei das primäre Amin der Formel (IV) Anilin ist.

**5.** Nichtwässrige Elektrolytzelle umfassend eine positive Elektrode, eine negative Elektrode und einen nichtwässrigen Elektrolyt umfassend mindestens ein aprotisches organisches Lösungsmittel und ein Trägersalz, wobei das aprotische organische Lösungsmittel aus der Gruppe ausgewählt ist bestehend aus 1,2-Dimethoxyethan, Tetrahydrofuran, Dimethylcarbonat, Diethylcarbonat, Diphenylcarbonat, Ethylencarbonat, Propylencarbonat, γ-Butyrolacton, γ-Valerolacton, Methylethylcarbonat und Ethylmethylcarbonat, und
wobei das Trägersalz eine Verbindung umfasst, die durch die folgende Formel (I) oder (II) dargestellt ist:

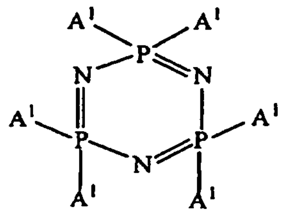

· · · · · (I)

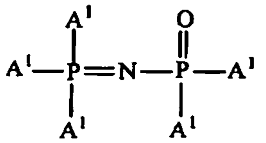

· · · · · (II)

(in den Formeln (I) und (II) ist $A^1$ unabhängig NRLi oder F und mindestens ein $A^1$ ist NRLi und R ist eine Alkylgruppe oder eine Arylgruppe.

**6.** Nichtwässrige Elektrolytzelle nach Anspruch 5, wobei ein Phosphazenderivat dem aprotischen organischen Lösungsmittel hinzugesetzt wird und das Phosphazenderivat eine Viskosität bei 25 °C von nicht mehr als 300 mPa·s (300 cP) aufweist und durch die folgende Formel (VIII) oder (IX) dargestellt ist:

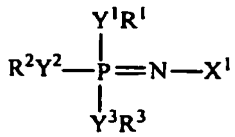

· · · · · (VIII)

(wobei $R^1$, $R^2$ und $R^3$ unabhängig eine Alkoxygruppe, eine Alkylgruppe, eine Carboxylgruppe, eine Acylgruppe oder eine Arylgruppe oder ein Halogenelement sind und $X^1$ ein Substituent ist, der mindestens ein Element enthält ausgewählt aus der Gruppe bestehend aus Kohlenstoff, Silicium, Germanium, Zinn, Stickstoff, Phosphor, Arsen, Antimon, Wismuth, Sauerstoff, Schwefel, Selen, Tellur und Polonium, und $Y^1$, $Y^2$ und $Y^3$ unabhängig eine $CH_2$-Gruppe, eine zweiwertige Verbindungsgruppe, die mindestens ein Element enthält ausgewählt aus der Gruppe bestehend aus Sauerstoff, Schwefel, Selen, Stickstoff, Bor, Aluminium, Scandium, Gallium, Yttrium, Indium, Lanthan, Thallium, Kohlenstoff, Silicium, Titan, Zinn, Germanium, Zirkonium, Blei, Phosphor, Vanadium, Arsen, Niob, Antimon, Tantal, Wismuth, Chrom, Molybdän, Tellur, Polonium, Wolfram, Eisen, Kobalt, und Nickel, ein zweiwertiges Element, das Sauerstoff, Schwefel oder Selen ist, oder eine Einfachbindung ist)

$(NPR^4{}_2)_n$ (IX)

(wobei $R^4$ unabhängig eine Alkoxygruppe, eine Alkylgruppe, eine Carboxylgruppe, eine Acylgruppe oder eine Arylgruppe oder ein Halogenelement ist und n 3 - 15 beträgt).

**7.** Nichtwässrige Elektrolytzelle nach Anspruch 6, wobei das Phosphazenderivat der Formel (IX) durch folgende Formel (X) dargestellt ist:

$(NPF_2)_n$ (X)

(wobei n 3 - 13 beträgt).

**8.** Nichtwässrige Elektrolytzelle nach Anspruch 6, wobei das Phosphazenderivat der Formel (IX) durch die folgende Formel (XI) dargestellt ist:

$(NPR^5{}_2)_n$ (XI)

(wobei $R^5$ unabhängig eine Alkoxygruppe, eine Alkylgruppe, eine Acylgruppe, eine Arylgruppe, eine Carboxylgruppe oder Fluor ist und mindestens eines aller $R^5$ eine fluorhaltige Alkoxygruppe, eine fluorhaltige Alkylgruppe, eine fluorhaltige Acylgruppe, eine fluorhaltige Arylgruppe oder Fluor ist und n 3 - 8 beträgt, vorausgesetzt, dass alle der

$R^5$ nicht Fluor sind.

**9.** Nichtwässrige Elektrolytzelle nach Anspruch 5, wobei ein Phosphazenderivat dem aprotischen Lösungsmittel hinzugesetzt wird und das Phosphazenderivat bei 25 °C ein Feststoff ist und durch die Formel (XII) dargestellt ist:

$$(NPR^6{}_2)_n \qquad \text{(XII)}$$

(wobei $R^6$ unabhängig eine Alkoxygruppe, eine Alkylgruppe, eine Carboxylgruppe, eine Acylgruppe, eine Arylgruppe oder ein Halogenelement ist und n 3 - 6 beträgt).

**10.** Nichtwässrige Elektrolytzelle nach Anspruch 5, wobei ein Isomer eines Phosphazenderivats dem aprotischen organischen Lösungsmittel hinzugesetzt wird und das Isomer des Phosphazenderivats durch die folgende Formel (XIII) dargestellt ist und ein Isomer eines Phosphazenderivats durch die folgende Formel (XIV) dargestellt ist:

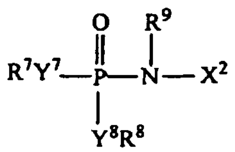

..... (XIII)

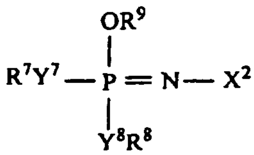

..... (XIV)

(in den Formeln (XIII) und (XIV) $R^7$, $R^8$ und $R^9$ unabhängig eine Alkoxygruppe, eine Alkylgruppe, eine Carboxylgruppe, eine Acylgruppe, eine Arylgruppe oder ein Halogenelement sind und $X^2$ ein Substituent ist, der mindestens ein Element enthält ausgewählt aus der Gruppe bestehend aus Kohlenstoff, Silicium, Germanium, Zinn, Stickstoff, Phosphor, Arsen, Antimon, Wismuth, Sauerstoff, Schwefel, Selen, Tellur und Polonium, und $Y^7$ und $Y^8$ unabhängig eine $CH_2$-Gruppe, eine zweiwertige Verbindungsgruppe, die mindestens ein Element enthält ausgewählt aus der Gruppe bestehend aus Sauerstoff, Schwefel, Selen, Stickstoff, Bor, Aluminium, Scandium, Gallium, Yttrium, Indium, Lanthan, Thallium, Kohlenstoff, Silicium, Titan, Zinn, Germanium, Zirkonium, Blei, Phosphor, Vanadium, Arsen, Niob, Antimon, Tantal, Wismuth, Chrom, Molybdän, Tellur, Polonium, Wolfram, Eisen, Kobalt, und Nickel, ein zweiwertiges Element, das Sauerstoff, Schwefel oder Selen ist, oder eine Einfachbindung ist).

**11.** Polymerzelle umfassend eine positive Elektrode, eine negative Elektrode, einen Elektrolyt, der ein Trägersalz umfasst, und ein Polymer, wobei des Trägersalz eine Verbindung umfasst, die durch die folgende Formel (I) oder (II) dargestellt ist:

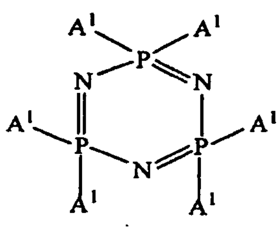

..... (I)

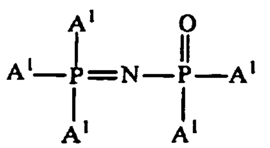

..... (II)

(in den Formeln (I) und (II) $A^1$ unabhängig NRLi oder F ist und mindestens ein $A^1$ NRLi ist und R eine Alkylgruppe

oder eine Acylgruppe ist).

**12.** Polymerzelle nach Anspruch 11, wobei das Polymer mindestens eines von Polyethylenoxid, Polyacrylat und Polypropylen ist.

**13.** Polymerzelle nach Anspruch 11 oder 12, wobei das Polymer ein gewichtsdurchschnittliches Molekulargewicht von nicht weniger als 10000 aufweist.

**14.** Polymerzelle nach Anspruch 13, wobei das gewichtsdurchschnittliche Molekulargewicht des Polymers nicht weniger als 5000000 beträgt.

**15.** Polymerzelle nach einem der Ansprüche 11 bis 14, wobei eine Menge des Polymers zu einer Gesamtmenge des Polymers und des Trägersalzes 80 - 95 Masse-% beträgt.

**16.** Polymerzelle nach einem der Ansprüche 11 bis 15, wobei der Elektrolyt des Weiteren ein Phosphazenderivat enthält und das Phosphazenderivat eine Viskosität bei 25 °C von nicht mehr als 300 mPa·s (300 cP) aufweist und durch die folgende Formel (VIII) oder (IX) dargestellt ist:

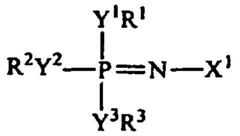

····· (VIII)

(wobei $R^1$, $R^2$ und $R^3$ unabhängig eine Alkoxygruppe, eine Alkylgruppe, eine Carboxylgruppe, eine Acylgruppe, eine Arylgruppe oder ein Halogenelement sind und $X^1$ ein Substituent ist, der mindestens ein Element enthält ausgewählt aus der Gruppe bestehend aus Kohlenstoff, Silicium, Germanium, Zinn, Stickstoff, Phosphor, Arsen, Antimon, Wismuth, Sauerstoff, Schwefel, Selen, Tellur und Polonium, und $Y^1$, $Y^2$ und $Y^3$ unabhängig eine $CH_2$-Gruppe, eine zweiwertige Verbindungsgruppe, die mindestens ein Element enthält ausgewählt aus der Gruppe bestehend aus Sauerstoff, Schwefel, Selen, Stickstoff, Bor, Aluminium, Scandium, Gallium, Yttrium, Indium, Lanthan, Thallium, Kohlenstoff, Silicium, Titan, Zinn, Germanium, Zirkonium, Blei, Phosphor, Vanadium, Arsen, Niob, Antimon, Tantal, Wismuth, Chrom, Molybdän, Tellur, Polonium, Wolfram, Eisen, Kobalt, und Nickel, ein zweiwertiges Element, das Sauerstoff, Schwefel oder Selen ist, oder eine Einfachbindung ist)

$$(NPR^4{}_2)_n \qquad (IX)$$

(wobei $R^4$ unabhängig eine Alkoxygruppe, eine Alkylgruppe, eine Carboxylgruppe, eine Acylgruppe oder eine Arylgruppe oder ein Halogenelement ist und n 3 - 15 beträgt).

**17.** Polymerzelle nach Anspruch 16, wobei das Phosphazenderivat der Formel (IX) durch die folgende Formel (X) dargestellt ist:

$$(NPF_2)_n \qquad (X)$$

(wobei n 3 - 13 beträgt).

**18.** Polymerzelle nach Anspruch 1, wobei das Phosphazenderivat der Formel (IX) durch die folgende Formel (XI) dargestellt ist:

$$(NPR^5{}_2)_n \qquad (XI)$$

(wobei $R^5$ unabhängig eine Alkoxygruppe, eine Alkylgruppe, eine Acylgruppe, eine Arylgruppe, eine Carboxylgruppe oder Fluor ist und mindestens eines aller $R^5$ eine fluorhaltige Alkyoxygruppe, eine fluorhaltige Alkylgruppe, eine fluorhaltige Acylgruppe, eine fluorhaltige Arylgruppe oder Fluor ist und n 3 - 8 beträgt, vorausgesetzt, dass alle der $R^5$ nicht Fluor sind).

**19.** Polymerzelle nach einem der Ansprüche 11 bis 15, wobei der Elektrolyt des weiteren ein Phosphazenderivat enthält und das Phosphazenderivat bei 25 °C ein Feststoff ist und durch die folgende Formel (XII) dargestellt ist:

$(NPR^6_2)_n$ (XII)

(wobei $R^6$ unabhängig eine Alkoxygruppe, eine Alkylgruppe, eine Carboxylgruppe, eine Acylgruppe, eine Arylgruppe oder ein Halogenelement ist und n 3 - 6 beträgt).

**20.** Polymerzelle nach einem der Ansprüche 11 bis 15, wobei der Elektrolyt des Weiteren ein Isomer eines Phosphazenderivats enthält und das Isomer des Phosphazenderivats durch die folgende Formel (XIII) dargestellt ist und ein Isomer eines Phosphazenderivats durch die folgende Formel (XIV) dargestellt ist:

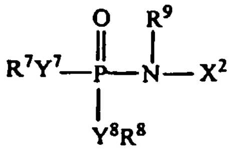

· · · · · (XIII)

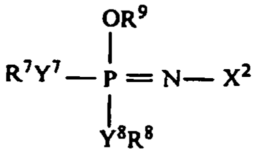

· · · · · (XIV)

(in den Formeln (XIII) und (XIV) $R^7$, $R^8$ und $R^9$ unabhängig eine Alkoxygruppe, eine Alkylgruppe, eine Carboxylgruppe, eine Acylgruppe, eine Arylgruppe oder ein Halogenelement sind und $X^2$ ein Substituent ist, der mindestens ein Element enthält ausgewählt aus der Gruppe bestehend aus Kohlenstoff, Silicium, Germanium, Zinn, Stickstoff, Phosphor, Arsen, Antimon, Wismuth, Sauerstoff, Schwefel, Selen, Tellur und Polonium, und $Y^7$ und $Y^8$ unabhängig eine $CH_2$-Gruppe, eine zweiwertige Verbindungsgruppe, die mindestens ein Element enthält ausgewählt aus der Gruppe bestehend aus Sauerstoff, Schwefel, Selen, Stickstoff, Bor, Aluminium, Scandium, Gallium, Yttrium, Indium, Lanthan, Thallium, Kohlenstoff, Silicium, Titan, Zinn, Germanium, Zirkonium, Blei, Phosphor, Vanadium, Arsen, Niob, Antimon, Tantal, Wismuth, Chrom, Molybdän, Tellur, Polonium, Wolfram, Eisen, Kobalt, und Nickel, ein zweiwertiges Element, das Sauerstoff, Schwefel oder Selen ist, oder eine Einfachbindung ist).

**21.** Polymerzelle nach einem der Ansprüche 16 bis 20, wobei ein Gesamtgehalt des Phosphazenderivats und des Isomers des Phosphazenderivats in dem Elektrolyt mindestens 0,5 Masse-% beträgt.

**22.** Polymerzelle nach Anspruch 21, wobei ein Gesamtgehalt des Phosphazenderivats und des Isomers des Phosphazenderivats in dem Elektrolyt mindestens 2,5 Masse-% beträgt.

## Revendications

**1.** Utilisation d'un composé représenté par la formule (I) suivante pour un sel support d'une pile à électrolyte non aqueux ou d'une pile à polymère, dans laquelle le composé représenté par la formule (I) est produit par un procédé qui comprend les étapes:

(i) d'une étape de réaction d'un dérivé de phosphazène représenté par la formule (III) suivante avec une amine primaire représentée par la formule (IV) suivante pour produire un dérivé de phosphazène représenté par la formule (V) suivante; et
(ii) d'une étape d'ajout du dérivé de phosphazène de la formule (V) avec un alcoxyde de lithium pour produire le composé représenté par la formule (I):

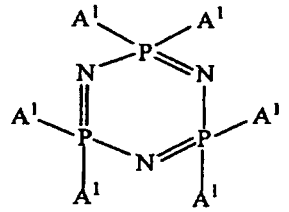

····· (I)

(dans laquelle $A^1$ est indépendamment NRLi ou F, et au moins un $A^1$ est NRLi, et R est un groupe alkyle ou un groupe aryle)

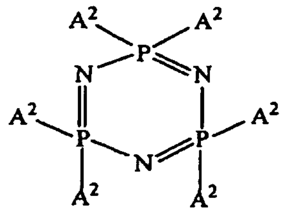

····· (III)

(dans laquelle $A^2$ est F ou Cl)

$R\text{-}NH_2$ (IV)

(dans laquelle R est un groupe alkyle ou un groupe aryle)

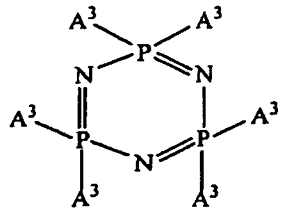

····· (V)

(dans laquelle $A^3$ est indépendamment NHR ou F, et au moins un $A^3$ est NHR, et R est un groupe alkyle ou un groupe aryle).

**2.** Utilisation du composé représenté par la formule (I) pour le sel support selon la revendication 1, dans laquelle l'amine primaire de la formule (IV) est l'aniline.

**3.** Utilisation d'un composé représenté par la formule (II) suivante pour un sel support d'une pile à électrolyte non aqueux ou d'une pile à polymère, dans laquelle le composé représenté par la formule (II) est produit par un procédé qui comprend les étapes:

(i) d'une étape de réaction d'un dérivé de phosphazène représenté par la formule (VI) suivante avec une amine primaire représentée par la formule (IV) suivante pour produire un dérivé de phosphazène représenté par la formule (VII) suivante; et
(ii) d'une étape d'ajout du dérivé de phosphazène de la formule (VII) avec un alcoxyde de lithium pour produire le composé représenté par la formule (II):

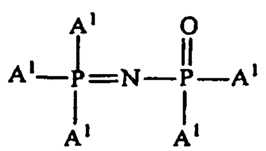

····· (II)

(dans laquelle $A^1$ est indépendamment NRLi ou F, et au moins un $A^1$ est NRLi, et R est un groupe alkyle ou un groupe aryle),

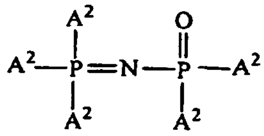

..... (VI)

(dans laquelle $A^2$ est F ou Cl)

$R\text{-}NH_2$ (IV)

(dans laquelle R est un groupe alkyle ou un groupe aryle)

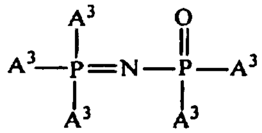

..... (VII)

(dans laquelle $A^3$ est indépendamment NHR ou F, et au moins un $A^3$ est NHR, et R est un groupe alkyle ou un groupe aryle).

4. Utilisation du composé représenté par la formule (II) pour le sel support selon la revendication 3, dans laquelle l'amine primaire de la formule (IV) est l'aniline.

5. Pile à électrolyte non aqueux comprenant une électrode positive, une électrode négative et un électrolyte non aqueux comprenant au moins un solvant organique aprotique et un sel support, dans laquelle le solvant organique aprotique est choisi dans le groupe constitué de 1,2-diméthoxyéthane, de tétrahydrofurane, de carbonate de diméthyle, de carbonate de diéthyle, de carbonate de diphényle, de carbonate d'éthylène, de carbonate de propylène, de γ-butyrolactone, de γ-valérolactone, de carbonate de méthyléthyle et de carbonate d'éthylméthyle, et
dans laquelle le sel support comprend un composé représenté par la formule (I) ou (II) suivante:

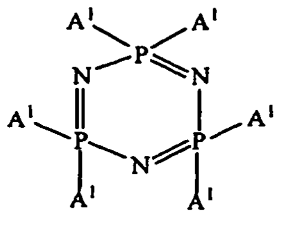

..... (I)

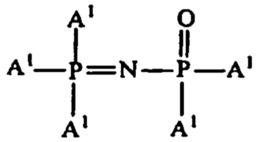

..... (II)

(dans les formules (I) et (II), $A^1$ est indépendamment NRLi ou F, et au moins un $A^1$ est NRLi, et R est un groupe alkyle ou un groupe aryle).

6. Pile à électrolyte non aqueux selon la revendication 5, dans laquelle un dérivé de phosphazène est ajouté au solvant organique aprotique et le dérivé de phosphazène possède une viscosité à 25°C de pas plus de 300 mPa·s (300 cP) et il est représenté par la formule (VIII) ou (IX) suivante:

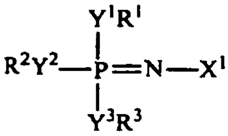 ····· (VIII)

(dans laquelle $R^1$, $R^2$ et $R^3$ sont indépendamment un groupe alcoxy, un groupe alkyle, un groupe carboxyle, un groupe acyle ou un groupe aryle ou un élément halogène, et $X^1$ est un substituant contenant au moins un élément choisi dans le groupe constitué de carbone, de silicium, de germanium, d'étain, d'azote, de phosphore, d'arsenic, d'antimoine, de bismuth, d'oxygène, de soufre, de sélénium, de tellure et de polonium, et $Y^1$, $Y^2$ et $Y^3$ sont indépendamment un groupe $CH_2$, un groupe de liaison bivalent contenant au moins un élément choisi dans le groupe constitué d'oxygène, de soufre, de sélénium, d'azote, de bore, d'aluminium, de scandium, de gallium, d'yttrium, d'indium, de lanthane, de thallium, de carbone, de silicium, de titane, d'étain, de germanium, de zirconium, de plomb, de phosphore, de vanadium, d'arsenic, de niobium, d'antimoine, de tantale, de bismuth, de chrome, de molybdène, de tellure, de polonium, de tungstène, de fer, de cobalt et de nickel, un élément bivalent qui est l'oxygène, le soufre ou le sélénium ou une liaison simple)

$(NPR^4{}_2)_n$ (IX)

(dans laquelle $R^4$ est indépendamment un groupe alcoxy, un groupe alkyle, un groupe carboxyle, un groupe acyle ou un groupe aryle ou un élément halogène, et n est 3-15).

7. Pile à électrolyte non aqueux selon la revendication 6, dans laquelle le dérivé de phosphazène de la formule (IX) est représenté par la formule (X) suivante:

$(NPF_2)_n$ (X)

(dans laquelle n est 3-13).

8. Pile à électrolyte non aqueux selon la revendication 6, dans laquelle le dérivé de phosphazène de la formule (IX) est représenté par la formule (XI) suivante:

$(NPR^5{}_2)_n$ (XI)

(dans laquelle $R^5$ est indépendamment un groupe alcoxy, un groupe alkyle, un groupe acyle, un groupe aryle, un groupe carboxyle ou un fluor, et au moins un de tous les $R^5$ est un groupe alcoxy contenant du fluor, un groupe alkyle contenant du fluor, un groupe acyle contenant du fluor, un groupe aryle contenant du fluor ou un fluor, et n est 3-8, à condition que les $R^5$ ne soient pas tous des fluors).

9. Pile à électrolyte non aqueux selon la revendication 5, dans laquelle un dérivé de phosphazène est ajouté au solvant aprotique et le dérivé de phosphazène est un solide à 25°C et il est représenté par la formule (XII) suivante:

$(NPR^6{}_2)_n$ (XII)

(dans laquelle $R^6$ est indépendamment un groupe alcoxy, un groupe alkyle, un groupe carboxyle, un groupe acyle, un groupe aryle ou un élément halogène, et n est 3-6).

10. Pile à électrolyte non aqueux selon la revendication 5, dans laquelle un isomère d'un dérivé de phosphazène est ajouté au solvant organique aprotique et l'isomère du dérivé de phosphazène est représenté par la formule (XIII) suivante et c'est un isomère d'un dérivé de phosphazène représenté par la formule (XIV) suivante:

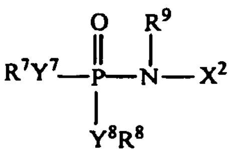 ····· (XIII)

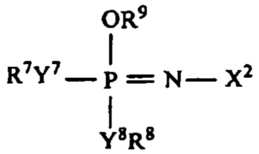

..... (XIV)

(dans les formules (XIII) et (XIV), $R^7$, $R^8$ et $R^9$ sont indépendamment un groupe alcoxy, un groupe alkyle, un groupe carboxyle, un groupe acyle, un groupe aryle ou un élément halogène, et $X^2$ est un substituant contenant au moins un élément choisi dans le groupe constitué de carbone, de silicium, de germanium, d'étain, d'azote, de phosphore, d'arsenic, d'antimoine, de bismuth, d'oxygène, de soufre, de sélénium, de tellure et de polonium, et $Y^7$ et $Y^8$ sont indépendamment un groupe $CH_2$, un groupe de liaison bivalent contenant au moins un élément choisi dans le groupe constitué d'oxygène, de soufre, de sélénium, d'azote, de bore, d'aluminium, de scandium, de gallium, d'yttrium, d'indium, de lanthane, de thallium, de carbone, de silicium, de titane, d'étain, de germanium, de zirconium, de plomb, de phosphore, de vanadium, d'arsenic, de niobium, d'antimoine, de tantale, de bismuth, de chrome, de molybdène, de tellure, de polonium, de tungstène, de fer, de cobalt et de nickel, un élément bivalent qui est l'oxygène, le soufre ou le sélénium ou une liaison simple).

**11.** Pile à polymère comprenant une électrode positive, une électrode négative, un électrolyte comprenant un sel support et un polymère, dans laquelle le sel support comprend un composé représenté par la formule (I) ou (II) suivante:

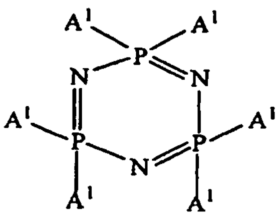

..... (I)

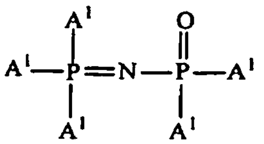

..... (II)

(dans les formules (I) et (II), $A^1$ est indépendamment NRLi ou F, et au moins un $A^1$ est NRLi, et R est un groupe alkyle ou un groupe acyle).

**12.** Pile à polymère selon la revendication 11, dans laquelle le polymère est au moins un parmi un oxyde de polyéthylène, un polyacrylate et un oxyde de polypropylène.

**13.** Pile à polymère selon la revendication 11 ou 12, dans laquelle le polymère possède un poids moléculaire moyen en poids de pas moins de 10.000.

**14.** Pile à polymère selon la revendication 13, dans laquelle le poids moléculaire moyen en poids du polymère est de pas moins de 5.000.000.

**15.** Pile à polymère selon l'une quelconque des revendications 11 à 14, dans laquelle la quantité du polymère sur la quantité totale du polymère et du sel support est de 80-95% en masse.

**16.** Pile à polymère selon l'une quelconque des revendications 11 à 15, dans laquelle l'électrolyte contient en outre un dérivé de phosphazène et le dérivé de phosphazène possède une viscosité à 25°C de pas plus de 300 mPa·s (300 cP) et il est représenté par la formule (VIII) ou (IX) suivante:

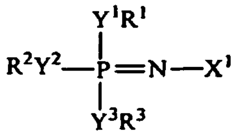

..... (VIII)

(dans laquelle $R^1$, $R^2$ et $R^3$ sont indépendamment un groupe alcoxy, un groupe alkyle, un groupe carboxyle, un groupe acyle, un groupe aryle ou un élément halogène, et $X^1$ est un substituant contenant au moins un élément choisi dans le groupe constitué de carbone, de silicium, de germanium, d'étain, d'azote, de phosphore, d'arsenic, d'antimoine, de bismuth, d'oxygène, de soufre, de sélénium, de tellure et de polonium, et $Y^1$, $Y^2$ et $Y^3$ sont indépendamment un groupe $CH_2$, un groupe de liaison bivalent contenant au moins un élément choisi dans le groupe constitué d'oxygène, de soufre, de sélénium, d'azote, de bore, d'aluminium, de scandium, de gallium, d'yttrium, d'indium, de lanthane, de thallium, de carbone, de silicium, de titane, d'étain, de germanium, de zirconium, de plomb, de phosphore, de vanadium, d'arsenic, de niobium, d'antimoine, de tantale, de bismuth, de chrome, de molybdène, de tellure, de polonium, de tungstène, de fer, de cobalt et de nickel, un élément bivalent qui est l'oxygène, le soufre ou le sélénium ou une liaison simple)

$(NPR^4_2)_n$ (IX)

(dans laquelle $R^4$ est indépendamment un groupe alcoxy, un groupe alkyle, un groupe carboxyle, un groupe acyle, un groupe aryle ou un élément halogène, et n est 3-15).

**17.** Pile à polymère selon la revendication 16, dans laquelle le dérivé de phosphazène de la formule (IX) est représenté par la formule (X) suivante:

$(NPF_2)_n$ (X)

(dans laquelle n est 3-13).

**18.** Pile à polymère selon la revendication 1, dans laquelle le dérivé de phosphazène de la formule (IX) est représenté par la formule *(XI) suivante:

$(NHR^5_2)_n$ (XI)

(dans laquelle $R^5$ est indépendamment un groupe alcoxy, un groupe alkyle, un groupe acyle, un groupe aryle, un groupe carboxyle ou un fluor, et au moins un de tous les $R^5$ est un groupe alcoxy contenant du fluor, un groupe alkyle contenant du fluor, un groupe acyle contenant du fluor, un groupe aryle contenant du fluor ou un fluor, et n est 3-8, à condition que les $R^5$ ne soient pas tous des fluors).

**19.** Pile à polymère selon l'une quelconque des revendications 11 à 15, dans laquelle l'électrolyte contient en outre un dérivé de phosphazène et le dérivé de phosphazène est un solide à 25°C et il est représenté par la formule (XII) suivante:

$(NPR^6_2)_n$ (XII)

(dans laquelle $R^6$ est indépendamment un groupe alcoxy, un groupe alkyle, un groupe carboxyle, un groupe acyle, un groupe aryle ou un élément halogène, et n est 3-6).

**20.** Pile à polymère selon l'une quelconque des revendications 11 à 15, dans laquelle l'électrolyte contient en outre un isomère d'un dérivé de phosphazène et l'isomère du dérivé de phosphazène est représenté par la formule (XIII) suivante et c'est un isomère d'un dérivé de phosphazène représenté par la formule (XIV) suivante:

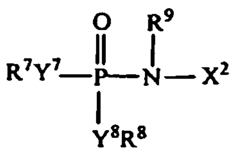

..... (XIII)

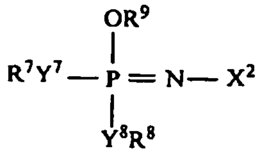 ····· (XIV)

(dans les formules (XIII) et (XIV), $R^7$, $R^8$ et $R^9$ sont indépendamment un groupe alcoxy, un groupe alkyle, un groupe carboxyle, un groupe acyle, un groupe aryle ou un élément halogène, et $X^2$ est un substituant contenant au moins un élément choisi dans le groupe constitué de carbone, de silicium, de germanium, d'étain, d'azote, de phosphore, d'arsenic, d'antimoine, de bismuth, d'oxygène, de soufre, de sélénium, de tellure et de polonium, et $Y^7$ et $Y^8$ sont indépendamment un groupe $CH_2$, un groupe de liaison bivalent contenant au moins un élément choisi dans le groupe constitué d'oxygène, de soufre, de sélénium, d'azote, de bore, d'aluminium, de scandium, de gallium, d'yttrium, d'indium, de lanthane, de thallium, de carbone, de silicium, de titane, d'étain, de germanium, de zirconium, de plomb, de phosphore, de vanadium, d'arsenic, de niobium, d'antimoine, de tantale, de bismuth, de chrome, de molybdène, de tellure, de polonium, de tungstène, de fer, de cobalt et de nickel, un élément bivalent qui est l'oxygène, le soufre ou le sélénium ou une liaison simple).

**21.** Pile à polymère selon l'une quelconque des revendications 16 à 20, dans laquelle la teneur totale du dérivé de phosphazène et de l'isomère du dérivé de phosphazène dans l'électrolyte est d'au moins 0,5% en masse.

**22.** Pile à polymère selon la revendication 21, dans laquelle la teneur totale du dérivé de phosphazène et de l'isomère du dérivé de phosphazène dans l'électrolyte est d'au moins 2,5% en masse.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- *Electrochemical and Solids State Letters,* 2000, vol. 3 (2), 63-65